(19) Europäisches Patentamt
European Patent Office
Office européen des brevets

(11) **EP 4 586 591 A1**

(12) **EUROPEAN PATENT APPLICATION**
published in accordance with Art. 153(4) EPC

(43) Date of publication:
**16.07.2025  Bulletin 2025/29**

(21) Application number: **22959764.6**

(22) Date of filing: **26.09.2022**

(51) International Patent Classification (IPC):
***H04L 69/08*** *(2022.01)*

(52) Cooperative Patent Classification (CPC):
**H04L 69/08**

(86) International application number:
**PCT/CN2022/121477**

(87) International publication number:
**WO 2024/065112 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **ZHAO, Yulong**
  **Shenzhen, Guangdong 518129 (CN)**
• **LIU, Yalin**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **PACKET CONVERSION METHOD AND APPARATUS, AND PACKET RECEIVING METHOD AND APPARATUS**

(57)     A packet conversion method and apparatus, and a packet receiving method and apparatus are provided. The method includes: obtaining a first original message of a first vehicle; and generating a first message based on the first original message and sending the first message. The first message is related to a feature of the first vehicle, and the first message is included in a first converted packet. The first converted packet includes a first valid signal and a first invalid signal, the first valid signal corresponds to the feature of the first vehicle, the first invalid signal is a signal corresponding to a feature that is of a vehicle other than the first vehicle and that is different from the feature of the first vehicle, and at least one first signal in the first valid signals belongs to the first message. According to implementations of this application, a packet that supports features of different vehicles can be provided. This facilitates reuse across vehicles.

```
┌─────────────────────────────────────────────────────────────────┐
│    S301: Obtain a first original message of a first vehicle       │
└─────────────────────────────────────────────────────────────────┘
                                │
                                ▼
┌─────────────────────────────────────────────────────────────────┐
│  S302: Convert the first original message into a first message    │
│                based on a feature of the first vehicle            │
└─────────────────────────────────────────────────────────────────┘
                                │
                                ▼
┌─────────────────────────────────────────────────────────────────┐
│              S303: Send the first message                         │
└─────────────────────────────────────────────────────────────────┘
```

FIG. 3

EP 4 586 591 A1

## Description

### TECHNICAL FIELD

This application relates to the field of in-vehicle communication, and in particular, to a packet conversion method and apparatus, and a packet receiving method and apparatus.

### BACKGROUND

In a process of evolution of a vehicle from a signal-oriented architecture to a service-oriented architecture (service-oriented architecture, SOA), hybrid networking is usually performed inside the vehicle through an Ethernet bus and an in-vehicle wired signal bus. Main functions of the vehicle are provided for a local application or a cross-domain application in a form of a service through an Ethernet. In consideration of limitations such as function security, performance, and hardware costs of a current SOA, signal-based communication provided through the in-vehicle wired signal bus is also performed.

However, in a current hybrid networking scenario, although an Ethernet message can be converted into a wired packet, a packet conversion manner is difficult to reuse across vehicles.

### SUMMARY

This application discloses a packet conversion method and apparatus, and a packet receiving method and apparatus, so that a packet that has a fixed format and supports features of different vehicles can be provided. This facilitates reuse across vehicles.

According to a first aspect, this application provides a packet conversion method, applied to a conversion apparatus. The method includes: obtaining a first original message of a first vehicle; generating a first message based on the first original message, where the first message is related to a feature of the first vehicle, and the first message is included in a first converted packet; and sending the first message. The first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message.

The conversion apparatus may be, for example, deployed on a vehicle integrated unit or a domain controller of the first vehicle. The conversion apparatus may be a component in the vehicle integrated unit or a component in the domain controller. The component may be, for example, at least one of a chip, an integrated circuit, and the like.

For example, the feature of the first vehicle may be at least one of the following features: a vehicle model of the first vehicle, configuration information of the first vehicle, a manufacturer of the first vehicle, component information of the first vehicle, and the like. Herein, the configuration information of the first vehicle may be a software configuration and/or a hardware configuration. For example, the hardware configuration of the first vehicle may be classified into three types: a basic configuration, an intermediate configuration, and an advanced configuration. The component information of the first vehicle may be related information of an apparatus for receiving the first converted packet.

The plurality of signals in the first converted packet are a largest set of signals corresponding to features of a plurality of vehicles. For example, the plurality of signals in the first converted packet may be obtained by the conversion apparatus in advance from at least one original equipment manufacturer (original equipment manufacturer, OEM). In addition, the conversion apparatus may further obtain a correspondence between the feature of the first vehicle and the at least one first signal from the OEM.

For example, the first valid signal may be understood as a signal that can be used by the first vehicle or a signal that needs to be used by the first vehicle, and the first invalid signal may be understood as a signal that cannot be used by the first vehicle or a signal that is not used by the first vehicle, but the first invalid signal can be used by the vehicle other than the first vehicle.

Herein, that at least one first signal in the first valid signal is associated with the first message means that the at least one first signal in the first valid signal belongs to the first message. In other words, the at least one first signal herein is included in the first message.

In the foregoing method, the original message of the first vehicle is converted into the first message based on the feature of the first vehicle. The first message is included in the first converted packet, and the first converted packet not only includes the first valid signal corresponding to the feature of the first vehicle, but also includes the first invalid signal corresponding to the feature of the vehicle other than the first vehicle. In addition, some or all signals in the first valid signal belong to the first message. This helps implement full quantization and platformization of the first converted packet. The first converted packet includes an output format of a valid signal and an invalid signal and may support reuse for vehicles with different features.

Optionally, the sending the first message includes: sending the first message to a first control apparatus of the first vehicle, where the first message is the first converted packet; or sending the first message to a target apparatus of the first vehicle. A communication protocol stack is deployed on the target apparatus.

Herein, when the first message is the first converted packet, it indicates that each signal in the first valid signal belongs to the first message. In other words, all signals in the first valid signal belong to the first message. Accordingly, when the first message is not the first converted packet, it means that some signals in the first valid signal belong to the first message.

For example, the communication protocol stack may be a controller area network (controller area network, CAN) protocol stack, a local interconnect network (local interconnect network, LIN) protocol stack, a FlexRay protocol stack, or a protocol stack of another in-vehicle wired signal class.

According to the foregoing implementation, based on whether the first message is the first converted packet, the conversion apparatus may send the first message to different objects. For example, when the first message is the first converted packet, a receiving terminal of the first message is the first control apparatus of the first vehicle; or when the first message is not the first converted packet, a receiving terminal of the first message is the target apparatus that is in the first vehicle and on which the communication protocol stack is deployed. In this way, applications in different scenarios may be supported, and applicability of the packet conversion method is improved.

Optionally, in a case of sending the first message to the target apparatus, the first converted packet further includes a first wired packet, the first wired packet is obtained through signal routing and reassembly based on a wired signal in the first vehicle, the first wired packet is related to the feature of the first vehicle, and at least one second signal in the first valid signal is associated with the first wired packet.

Herein, that at least one second signal in the first valid signal is associated with the first wired packet means that the at least one second signal in the first valid signal belongs to the first wired packet. In other words, the at least one second signal herein is included in the first wired packet. That is, when the first message is sent to the target apparatus, some signals in the first valid signal come from the first message, and some signals in the first valid signal come from the first wired packet.

Optionally, the first original message includes at least one message, a type of the first original message includes at least one of an application programming interface API message and an in-vehicle wired signal, and the API message includes at least one of the following types: an API message corresponding to a scalable service-oriented middleware over IP SOME/IP-based service; and an API message corresponding to an in-vehicle wired signal-based service.

The SOME/IP-based service indicates a service component presented externally by using SOME/IP, for example, may be an atomic service, a composite service, or an application service. The SOME/IP-based service may be understood as a local native service in an SOA.

For example, if the SOME/IP-based service is a service of a vehicle body domain, a vehicle part such as a wiper or a rear view mirror in the vehicle body domain may be directly adjusted by using the SOME/IP-based service. If the SOME/IP-based service is a service of a cockpit domain, a vehicle part such as a seat or a camera in the cockpit domain may be directly adjusted by using the SOME/IP-based service.

The in-vehicle wired signal-based service is to provide the in-vehicle wired signal as a service. That is, a hardware resource such as a sensor, an actuator, or a legacy electronic control unit (legacy ECU) is abstracted to interact with the outside through an API. The legacy ECU may be, for example, a microcontroller unit (microcontroller unit, MCU), an electronic stability program (electronic stability program, ESP) controller, an electric power steering (electric power steering, EPS) controller, a battery management system (battery management system, BMS), or another ECU.

For example, the ESP controller accesses an in-vehicle network through an in-vehicle bus, and the ESP controller has a control function, but an ESP signal sent by the ESP controller is abstracted as an API to implement interaction with the outside.

For example, when the type of the first original message includes the in-vehicle wired signal, the first original message includes at least one of the following: at least one CAN packet, at least one LIN packet, and at least one FlexRay packet.

According to the foregoing implementation, signal escape in different scenarios may be completed for different types of original messages, to output a packet with a unified and fixed format. In this way, a difference between a plurality of different input signal sources may be shielded.

Optionally, the first original message includes a first API message and a second API message, and the first API message and the second API message satisfy any one of the following cases:

the first API message and the second API message correspond to a same service; or
the first API message and the second API message correspond to different services.

For example, that the first API message and the second API message correspond to a same service may be understood as follows: Both the first API message and the second API message correspond to a service 1. A type of the service 1 is the SOME/IP-based service or the in-vehicle wired signal-based service.

For example, that the first API message and the second API message correspond to different services may be understood as follows: A service corresponding to the first API message and a service corresponding to the second API message are two services of different types or two different services of a same type.

For example, the first API message corresponds to the service 1, and the second API message corresponds to a service 2. If the service 1 is a service obtained after the ESP signal is abstracted, and the service 2 is a service obtained after the EPS signal is abstracted, the service 1 and the service 2 are two different services of a same type. If the service 1 is a native service of the vehicle body domain, and the service 2 is a service obtained after the ESP signal is abstracted, the service 1 and the service 2 are two services of different types.

According to the foregoing implementation, the API messages from the different services or the same service may be converted, so that signal escape in different scenarios is completed, and applicability of the packet conversion method is improved.

Optionally, the obtaining a first original message of a first vehicle includes: receiving the first API message from a second control apparatus of the first vehicle; and receiving the second API message from a third control apparatus of the first vehicle.

For example, the conversion apparatus, the second control apparatus, and the third control apparatus may all be deployed on a same domain controller or a same vehicle integrated unit.

For example, the conversion apparatus is deployed on a domain controller or a vehicle integrated unit, and the second control apparatus and the third control apparatus are deployed on a same domain controller or a same vehicle integrated unit, but the domain controller or the vehicle integrated unit on which the conversion apparatus is deployed is different from the domain controller or the vehicle integrated unit on which the second control apparatus is deployed.

For example, the conversion apparatus, the second control apparatus, and the third control apparatus are respectively deployed on different domain controllers and/or different vehicle integrated units.

According to the foregoing implementation, the conversion apparatus may obtain the first original message from different message source terminals.

Optionally, the obtaining a first original message of a first vehicle includes: receiving the first original message from a fourth control apparatus of the first vehicle.

For example, the fourth control apparatus and the conversion apparatus may be deployed on a same domain controller or a same vehicle integrated unit of the first vehicle, or may be deployed on different domain controllers or different vehicle integrated units of the first vehicle.

According to the foregoing implementation, the conversion apparatus may obtain the first original message from a same message source terminal.

Optionally, the type of the first original message includes the application programming interface API message, and the at least one first signal in the first valid signal corresponds to at least one API parameter in the first original message.

For example, that the at least one first signal corresponds to at least one API parameter may be specifically as follows: One first signal corresponds to one API parameter, a plurality of first signals correspond to one API parameter, one first signal corresponds to a plurality of API parameters, or there is another correspondence. This is not specifically limited herein.

It may be learned that there is a diversity in correspondences between signals in the first valid signal and API parameters in the first original message.

Optionally, a first signal in the first valid signal includes at least one first state, a first API parameter in the first original message corresponds to the first signal, the first API parameter includes at least one second state, and a mapping rule between the at least one first state and the at least one second state satisfies at least one of the following cases:

mapping is performed based on a similarity between physical meanings of states; and
a quantity of the at least one first state is different from a quantity of the at least one second state, and mapping is performed based on a preset ratio, where the preset ratio is obtained based on the quantity of the at least one first state and the quantity of the at least one second state.

For example, that a first signal includes at least one first state means that the first signal may be represented by a field, a binary value, or the like, and different preset values of the first signal may represent a plurality of first states, but a value of the first signal at any moment may be only one of a plurality of preset values to represent one first state. Correspondingly, for that the first API parameter includes at least one second state, refer to the description that a first signal includes at least one first state. Details are not described herein again.

For example, the at least one first state of the first signal includes a state 1, a state 2, and a state 3. When the first signal takes a first preset value, it indicates the state 1; when the first signal takes a second preset value, it indicates the state 2; and when the first signal takes a third preset value, it indicates the state 3.

According to the foregoing implementation, a correspondence between the at least one first state of the first signal in the first valid signal and the at least one second state of the first API parameter in the first original message may be quickly determined according to different mapping rules. This helps improve efficiency of signal escape.

Optionally, a type of the first converted packet is an in-vehicle wired signal, and the first converted packet is any one of a controller area network CAN packet, a local interconnect network LIN packet, and a FlexRay packet.

Optionally, the conversion apparatus is deployed in any one of the following components of the first vehicle:

the vehicle integrated unit VIU;
a vehicle domain controller VDC;
a cockpit domain controller CDC; or
a mobile data center MDC.

For example, if logical functions of a plurality in the VDC, the MDC, and the CDC are integrated, the conversion apparatus may also be deployed on a domain controller that integrates a plurality of logical functions. For example, when integration is performed on the MDC and the CDC, the conversion apparatus may be deployed on a domain controller that can provide an automatic driving control function and a cockpit control function.

It may be learned that deployment of the conversion apparatus on the first vehicle is flexible, and can meet message conversion requirements in various scenarios.

Optionally, the method further includes: obtaining a second original message of a second vehicle; generating a second message based on the second original message, where the second message is related to a feature of the second vehicle, and the second message is included in a second converted packet; and sending the second message. The second converted packet includes a plurality of signals, the plurality of signals include a second valid signal and a second invalid signal, the second valid signal corresponds to the feature of the second vehicle, the second invalid signal is a signal corresponding to a feature of a vehicle other than the second vehicle, the feature of the vehicle other than the second vehicle is different from the feature of the second vehicle, at least one signal in the second valid signal is associated with the second message, the first valid signal and the second valid signal differ in terms of at least one signal, and the first invalid signal and the second invalid signal differ in terms of at least one signal.

For example, a signal 1 is one of the plurality of signals. The signal 1 belongs to the first valid signal and the signal 1 belongs to the second invalid signal.

It may be learned that, when the conversion apparatus is deployed on different vehicles, signals included in converted packets are the same. To be specific, names of the signals are the same and a quantity of the signals is the same. For example, the first converted packet includes N signals, and the second converted packet also includes the N signals. When the method is applied to different vehicles, among the N signals, based on a feature of a vehicle, a signal corresponding to the feature of the vehicle is used as a valid signal of the vehicle, and a signal not corresponding to the vehicle is used as an invalid signal of the vehicle. In this way, converted packets with a unified and fixed format may be provided for different receiving terminals. This implements reuse across vehicles.

According to a second aspect, this application provides a packet receiving method. The method includes: receiving a first converted packet. The first converted packet includes a first message, the first message is generated based on a first original message of a first vehicle, and the first message is related to a feature of the first vehicle. The first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message.

The method may be applied to a first control apparatus. The first control apparatus may be deployed on a vehicle integrated unit or a domain controller of the first vehicle. The first control apparatus may be a component in the vehicle integrated unit or a component in the domain controller. The component may be, for example, at least one of a chip, an integrated circuit, and the like.

Herein, for information such as the feature of the first vehicle, the plurality of signals in the first converted packet, the first valid signal, the first invalid signal, and the association between the at least one first signal in the first valid signal and the first message, refer to the descriptions of corresponding content in the first aspect. Details are not described herein again.

In the foregoing method, the obtained first converted packet not only includes the first valid signal corresponding to the feature of the first vehicle, but also includes the first invalid signal corresponding to the feature of the vehicle other than the first vehicle. In this way, the first converted packet has features such as full quantization and platformization. The first converted packet includes an output format of a valid signal and an invalid signal and may support reuse for vehicles with different features.

Optionally, the receiving a first converted packet includes: receiving the first converted packet from a conversion apparatus of the first vehicle, where the first message is the first converted packet; or receiving the first converted packet from a target apparatus of the first vehicle. A communication protocol stack is deployed on the target apparatus.

Herein, a domain controller or a vehicle integrated unit on which the conversion apparatus is deployed is different from the domain controller or the vehicle integrated unit on which the first control apparatus is deployed, and a domain controller or a vehicle integrated unit on which the target apparatus is deployed is different from the domain controller or the vehicle integrated unit on which the first control apparatus is deployed. The domain controller or the vehicle integrated unit on which the conversion apparatus is deployed is also different from the domain controller or the vehicle integrated unit on which the target apparatus is deployed.

According to the foregoing implementation, the first converted packet may be obtained from different transmitting terminals in different scenarios. For example, when the first message is the first converted packet, the first converted packet is received from the conversion apparatus of the first vehicle; or when the first message is not the first converted packet, the first converted packet is received from the target apparatus that is in the first vehicle and on which the communication protocol stack is deployed.

For technical effects of any feature in any one of the following possible implementations of the second aspect, refer to the descriptions of technical effects of corresponding features in the first aspect. Details are not described herein again.

Optionally, in a case of receiving the first converted packet from the target apparatus, the first converted packet further includes a first wired packet, the first wired packet is obtained through signal routing and reassembly based on a wired signal in the first vehicle, the first wired packet is related to the feature of the first vehicle, and at least one second signal in the first valid signal is associated with the first wired packet.

Optionally, the first original message includes at least one message, a type of the first original message includes at least one of an application programming interface API message and an in-vehicle wired signal, and the API message includes at least one of the following types: an API message corresponding to a scalable service-oriented middleware over IP SOME/IP-based service; and an API message corresponding to an in-vehicle wired signal-based service.

Optionally, the first original message includes a first API message and a second API message, and the first API message and the second API message satisfy any one of the following cases:

the first API message and the second API message correspond to a same service; or
the first API message and the second API message correspond to different services.

Optionally, the type of the first original message includes the application programming interface API message, and the at least one first signal in the first valid signal corresponds to at least one API parameter in the first original message.

Optionally, a first signal in the first valid signal includes at least one first state, a first API parameter in the first original message corresponds to the first signal, the first API parameter includes at least one second state, and a mapping rule between the at least one first state and the at least one second state satisfies at least one of the following cases:

mapping is performed based on a similarity between physical meanings of states; and
a quantity of the at least one first state is different from a quantity of the at least one second state, and mapping is performed based on a preset ratio, where the preset ratio is obtained based on the quantity of the at least one first state and the quantity of the at least one second state.

Optionally, a type of the first converted packet is an in-vehicle wired signal, and the first converted packet is any one of a controller area network CAN packet, a local interconnect network LIN packet, and a FlexRay packet.

According to a third aspect, this application provides a packet conversion method. The method includes: receiving a first message, where the first message is generated based on a first original message of a first vehicle, and the first message is associated with a feature of the first vehicle; obtaining a first converted packet based on a first wired packet and the first message, where the first wired packet is obtained through signal routing and reassembly based on a wired signal in the first vehicle, and the first wired packet is related to the feature of the first vehicle; and the first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, at least one first signal in the first valid signal is associated with the first message, and at least one second signal in the first valid signal is associated with the first wired packet; and sending the first converted packet to a first control apparatus of the first vehicle.

The method may be applied to a target apparatus on which a communication protocol stack is deployed. The target apparatus may be deployed on a domain controller or a vehicle integrated unit of the first vehicle. The target apparatus may be, for example, a component in the vehicle integrated unit or a component in the domain controller. The component may be, for example, at least one of a chip, an integrated circuit, and the like.

The communication protocol stack may be, for example, a CAN protocol stack, a LIN protocol stack, a FlexRay protocol stack, or a protocol stack of another in-vehicle wired signal class.

For example, the receiving a first message is specifically as follows: receiving the first message from a conversion apparatus of the first vehicle. The first message is obtained by the conversion apparatus through conversion of the first original message of the first vehicle.

Herein, the plurality of signals in the first converted packet are a largest set of signals corresponding to features of a plurality of vehicles. For example, the plurality of signals in the first converted packet may be obtained by the target apparatus in advance from at least one original equipment manufacturer (original equipment manufacturer, OEM). In addition, the conversion apparatus may further obtain a correspondence between the feature of the first vehicle and the at least one second signal from the OEM.

In the foregoing method, the target apparatus may output, with reference to the first message and the first wired packet that is obtained through signal routing and reassembly, a converted packet with a fixed format. This not only shields a difference between a plurality of different input signal sources, but also implements full quantization and platformization of the output converted packet, thereby facilitating reuse across vehicles.

For technical effects of any feature in any one of the following possible implementations of the third aspect, refer to the descriptions of technical effects of corresponding features in the first aspect. Details are not described herein again.

Optionally, the first original message includes at least one message, a type of the first original message includes at least one of an application programming interface API message and an in-vehicle wired signal, and the API message includes at least one of the following types: an API message corresponding to a scalable service-oriented middleware over IP SOME/IP-based service; and an API message corresponding to an in-vehicle wired signal-based service.

Optionally, the first original message includes a first API message and a second API message, and the first API message and the second API message satisfy any one of the following cases:

the first API message and the second API message correspond to a same service; or
the first API message and the second API message correspond to different services.

Optionally, the type of the first original message includes the application programming interface API message, and the at least one first signal in the first valid signal corresponds to at least one API parameter in the first original message.

Optionally, a first signal in the first valid signal includes at least one first state, a first API parameter in the first original message corresponds to the first signal, the first API parameter includes at least one second state, and a mapping rule between the at least one first state and the at least one second state satisfies at least one of the following cases:

mapping is performed based on a similarity between physical meanings of states; and
a quantity of the at least one first state is different from a quantity of the at least one second state, and mapping is performed based on a preset ratio, where the preset ratio is obtained based on the quantity of the at least one first state and the quantity of the at least one second state.

Optionally, a type of the first converted packet is an in-vehicle wired signal, and the first converted packet is any one of a controller area network CAN packet, a local interconnect network LIN packet, and a FlexRay packet.

According to a fourth aspect, this application provides a packet conversion apparatus. The apparatus is a conversion apparatus or the apparatus is included in the conversion apparatus, and the apparatus includes: an obtaining unit, configured to obtain a first original message of a first vehicle; a processing unit, configured to generate a first message based on the first original message, where the first message is related to a feature of the first vehicle, and the first message is included in a first converted packet; and a sending unit, configured to send the first message. The first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message.

Optionally, the sending unit is specifically configured to: when the first message is the first converted packet, send the first message to a first control apparatus of the first vehicle; or send the first message to a target apparatus of the first vehicle. A communication protocol stack is deployed on the target apparatus.

Optionally, in a case of sending the first message to the target apparatus, the first converted packet further includes a first wired packet, the first wired packet is obtained through signal routing and reassembly based on a wired signal in the first vehicle, the first wired packet is related to the feature of the first vehicle, and at least one second signal in the first valid signal is associated with the first wired packet.

Optionally, the first original message includes at least one message, a type of the first original message includes at least one of an application programming interface API message and an in-vehicle wired signal, and the API message includes at least one of the following types: an API message corresponding to a scalable service-oriented middleware over IP SOME/IP-based service; and an API message corresponding to an in-vehicle wired signal-based service.

Optionally, the first original message includes a first API message and a second API message, and the first API message and the second API message satisfy any one of the following cases:

the first API message and the second API message correspond to a same service; or
the first API message and the second API message correspond to different services.

Optionally, the obtaining unit is specifically configured to: receive the first API message from a second control apparatus of the first vehicle; and receive the second API message from a third control apparatus of the first vehicle.

Optionally, the obtaining unit is specifically configured to receive the first original message from a fourth control apparatus of the first vehicle.

Optionally, the type of the first original message includes the application programming interface API message, and the at least one first signal in the first valid signal corresponds to at least one API parameter in the first original message.

Optionally, a first signal in the first valid signal includes at least one first state, a first API parameter in the first original message corresponds to the first signal, the first API parameter includes at least one second state, and a mapping rule between the at least one first state and the at least one second state satisfies at least one of the following cases:

mapping is performed based on a similarity between physical meanings of states; and
a quantity of the at least one first state is different from a quantity of the at least one second state, and mapping is performed based on a preset ratio, where the preset ratio is obtained based on the quantity of the at least one first state and the quantity of the at least one second state.

Optionally, a type of the first converted packet is an in-vehicle wired signal, and the first converted packet is any one of a controller area network CAN packet, a local interconnect network LIN packet, and a FlexRay packet.

Optionally, the conversion apparatus is deployed in any one of the following components of the first vehicle:

a vehicle integrated unit VIU;
a vehicle domain controller VDC;
a cockpit domain controller CDC; or
a mobile data center MDC.

Optionally, the obtaining unit is further configured to obtain a second original message of a second vehicle. The processing unit is further configured to generate a second message based on the second original message. The second message is related to a feature of the second vehicle, and the second message is included in a second converted packet. The sending unit is further configured to send the second message. The second converted packet includes a plurality of signals, the plurality of signals include a second valid signal and a second invalid signal, the second valid signal corresponds to the feature of the second vehicle, the second invalid signal is a signal corresponding to a feature of a vehicle other than the second vehicle, the feature of the vehicle other than the second vehicle is different from the feature of the second vehicle, at least one signal in the second valid signal is associated with the second message, the first valid signal and the second valid signal differ in terms of at least one signal, and the first invalid signal and the second invalid signal differ in terms of at least one signal.

According to a fifth aspect, this application provides a packet receiving apparatus. The apparatus includes a receiving unit, configured to receive a first converted packet. The first converted packet includes a first message, the first message is generated based on a first original message of a first vehicle, and the first message is related to a feature of the first vehicle. The first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message.

Optionally, the receiving unit is specifically configured to: when the first message is the first converted packet, receive the first converted packet from a conversion apparatus of the first vehicle; or receive the first converted packet from a target apparatus of the first vehicle. A communication protocol stack is deployed on the target apparatus.

Optionally, in a case of receiving the first converted packet from the target apparatus, the first converted packet further includes a first wired packet, the first wired packet is obtained through signal routing and reassembly based on a wired signal in the first vehicle, the first wired packet is related to the feature of the first vehicle, and at least one second signal in the first valid signal is associated with the first wired packet.

Optionally, the first original message includes at least one message, a type of the first original message includes at least one of an application programming interface API message and an in-vehicle wired signal, and the API message includes at least one of the following types: an API message corresponding to a scalable service-oriented middleware over IP SOME/IP-based service; and an API message corresponding to an in-vehicle wired signal-based service.

Optionally, the first original message includes a first API message and a second API message, and the first API message and the second API message satisfy any one of the following cases:

the first API message and the second API message correspond to a same service; or

the first API message and the second API message correspond to different services.

Optionally, the type of the first original message includes the application programming interface API message, and the at least one first signal in the first valid signal corresponds to at least one API parameter in the first original message.

Optionally, a first signal in the first valid signal includes at least one first state, a first API parameter in the first original message corresponds to the first signal, the first API parameter includes at least one second state, and a mapping rule between the at least one first state and the at least one second state satisfies at least one of the following cases:

mapping is performed based on a similarity between physical meanings of states; and

a quantity of the at least one first state is different from a quantity of the at least one second state, and mapping is performed based on a preset ratio, where the preset ratio is obtained based on the quantity of the at least one first state and the quantity of the at least one second state.

Optionally, a type of the first converted packet is an in-vehicle wired signal, and the first converted packet is any one of a controller area network CAN packet, a local interconnect network LIN packet, and a FlexRay packet.

According to a sixth aspect, this application provides a packet conversion apparatus. The apparatus includes: a receiving unit, configured to receive a first message, where the first message is generated based on a first original message of a first vehicle, and the first message is associated with a feature of the first vehicle; a processing unit, configured to obtain a first converted packet based on a first wired packet and the first message, where the first wired packet is obtained through signal routing and reassembly based on a wired signal in the first vehicle, and the first wired packet is related to the feature of the first vehicle; and the first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, at least one first signal in the first valid signal is associated with the first message, and at least one second signal in the first valid signal is associated with the first wired packet; and a sending unit, configured to send the first converted packet to a first control apparatus of the first vehicle.

Optionally, the first original message includes at least one message, a type of the first original message includes at least one of an application programming interface API message and an in-vehicle wired signal, and the API message includes at least one of the following types: an API message corresponding to a scalable service-oriented middleware over IP SOME/IP-based service; and an API message corresponding to an in-vehicle wired signal-based service.

Optionally, the first original message includes a first API message and a second API message, and the first API message and the second API message satisfy any one of the following cases:

the first API message and the second API message correspond to a same service; or

the first API message and the second API message correspond to different services.

Optionally, the type of the first original message includes the application programming interface API message, and the at least one first signal in the first valid signal corresponds to at least one API parameter in the first original message.

Optionally, a first signal in the first valid signal includes at least one first state, a first API parameter in the first original message corresponds to the first signal, the first API parameter includes at least one second state, and a mapping rule between the at least one first state and the at least one second state satisfies at least one of the following cases:

mapping is performed based on a similarity between physical meanings of states; and

a quantity of the at least one first state is different from a quantity of the at least one second state, and mapping is performed based on a preset ratio, where the preset ratio is obtained based on the quantity of the at least one first state and the quantity of the at least one second state.

Optionally, a type of the first converted packet is an in-vehicle wired signal, and the first converted packet is any one of a controller area network CAN packet, a local interconnect network LIN packet, and a FlexRay packet.

According to a seventh aspect, this application provides a chip. The chip includes at least one processor and a communication interface, and the communication interface is configured to provide information input and/or output for the at least one processor. The chip is configured to implement the method according to any one of the first aspect or the possible implementation of the first aspect, or configured to implement the method according to any one of the second aspect or the possible implementation of the second aspect, or configured to implement the method according to any one of the third aspect or the possible implementation of the third aspect.

According to an eighth aspect, this application provides a vehicle. The vehicle includes at least one of a first apparatus, a second apparatus, and a third apparatus. The first apparatus is configured to implement the method according to any one of the first aspect or the possible implementations of the first aspect, the second apparatus is configured to implement the method according to any one of the second aspect or the possible implementations of the second aspect, and a fourth apparatus is configured to implement the method according to any one of the third aspect or the possible implementations of the third aspect.

For example, the first apparatus may be the apparatus in any possible implementation of the fourth aspect or the chip in the seventh aspect, the second apparatus may be the apparatus in any possible implementation of the fifth aspect or the chip in the seventh aspect, and the third apparatus may be the apparatus in any possible implementation of the sixth aspect or the chip in the seventh aspect.

According to a ninth aspect, this application provides a computer-readable storage medium, including computer instructions. When the computer instructions are run by a processor, the method according to any one of the first aspect or the possible implementations of the first aspect is implemented, or the method according to any one of the second aspect or the possible implementations of the second aspect is implemented, or the method according to any one of the third aspect or the possible implementations of the third aspect is implemented.

According to a tenth aspect, this application provides a computer program product. When the computer program product is executed by a processor, the method according to any one of the first aspect or the possible implementation of the first aspect is implemented, or the method according to any one of the second aspect or the possible implementation of the second aspect is implemented, or the method according to any one of the third aspect or the possible implementation of the third aspect is implemented.

For example, the computer program product may be a software installation package.

## BRIEF DESCRIPTION OF DRAWINGS

FIG. 1 is a diagram of an architecture of an in-vehicle communication system according to an embodiment of this application;
FIG. 2 is a diagram of a communication system according to an embodiment of this application;
FIG. 3 is a flowchart of a packet conversion method according to an embodiment of this application;
FIG. 4A is a state mapping diagram according to an embodiment of this application;
FIG. 4B is another state mapping diagram according to an embodiment of this application;
FIG. 4C is another state mapping diagram according to an embodiment of this application;
FIG. 5 is another state mapping diagram according to an embodiment of this application;
FIG. 6 is a flowchart of another packet conversion method according to an embodiment of this application;
FIG. 7 is a diagram of a scenario in a first vehicle according to an embodiment of this application;
FIG. 8A is a diagram of a structure of a conversion apparatus according to an embodiment of this application;
FIG. 8B is a diagram of a structure of a communication apparatus according to an embodiment of this application; and
FIG. 9 is a diagram of a structure of a communication device according to an embodiment of this application.

## DESCRIPTION OF EMBODIMENTS

It should be noted that prefix words such as "first" and "second" used in this application are only intended to distinguish between different described objects, and there is no limitation on a location, a sequence, a priority, a quantity, content, or the like of the described objects. For example, if the described object is a "field", ordinal numbers before "fields" in a "first field" and a "second field" do not limit a location or a sequence of the "fields", and "first" and "second" do not limit whether the "fields" modified by "first" and "second" are in a same message, and do not limit a sequence of the "first field" and the "second field". For another example, if the described object is a "level", ordinal numbers before "levels" in a "first level" and a "second level" do not limit a priority of the "levels". For another example, a quantity of described objects is not limited by a prefix word, and may be one or more. A "first device" is used as an example, where a quantity of "devices" may be one or more. In addition, objects modified by different prefix words may be the same or different. For example, if the described object is a "device", a "first device" and a "second device" may be a same device, devices of a same type, or devices of different types. For another example, if the described object is "information", "first information" and "second information" may be information of same content or information of different content. In conclusion, in embodiments of this application, the use of the prefix word used to distinguish between the described objects does not constitute a limitation on the described objects. For the description of the described objects, refer to the description of the context in the claims or the embodiments. The use of the prefix word should not constitute an unnecessary limitation.

It should be noted that, a description manner such as "at least one item (or at least one) of a1, a2, ..., and an" used in embodiments of this application includes a case in which any one of a1, a2, ..., and an exists alone, and also includes a case in which any combination of any plurality of a1, a2, ..., and an exists. Each case may exist alone. For example, a description manner of "at least one of a, b, and c" includes the following cases: a single a, a single b, a single c, a combination of a and b, a combination of a and c, a combination of b and c, or a combination of a, b, and c.

For ease of understanding, the following first describes related terms that may be used in embodiments of this application.

(1) CAN bus

The controller area network (controller area network, CAN) bus is a shared two-wire serial communication bus, may transmit a signal by using a twisted pair or an optical fiber cable, and may be used in fields of an automotive power system, a chassis, and a vehicle body electronics.

(2) LIN bus

The local interconnect network (local interconnect network, LIN) bus is a low-cost serial communication bus, and is configured to control a distributed electronic system in an automobile. The LIN bus is applicable to a communication scenario in which a requirement on a network bandwidth, performance, or a fault tolerance function is not high, and mainly serves as an auxiliary to the CAN bus. A difference between the LIN bus and the CAN bus is mainly as follows: The LIN bus uses a single-primary multi-secondary mode architecture (that is, a secondary node sends information only when a primary node has a requirement), uses a single signal wire for transmission, and has a lighter-weight processing protocol stack.

(3) FlexRay bus

The FlexRay bus is a bus standard with deterministic time, distributed clock synchronization, and fault tolerance. A main advantage of FlexRay is that FlexRay has a higher bandwidth than the CAN bus, but has high costs, and is applicable to a system controlled by wire (such as suspension control, gear shift control, brake control, and steering control) in a vehicle.

(4) SOME/IP protocol

A scalable service-oriented middleware over IP (scalable service-oriented middleware over IP, SOME/IP) is a core communication protocol for implementing a service-oriented architecture (service-oriented architecture, SOA) of the automobile. The SOME/IP protocol is used for transmission of a control message and application data in an in-vehicle Ethernet. The SOME/IP protocol is located at an application layer of an open system interconnection reference model (open system interconnection reference model, OSI).

A communication mechanism of the SOME/IP protocol needs to consider a requirement of a receiver. For example, a request is sent only when an electronic control unit requires data. This is different from a communication mechanism of a conventional bus. For example, in an in-vehicle network mainly using the CAN bus, data sending depends on a sending periodicity of a sender or a signal change detected by a sender. Therefore, the SOME/IP protocol may effectively reduce loads on a bus.

The following describes technical solutions of this application with reference to the accompanying drawings.

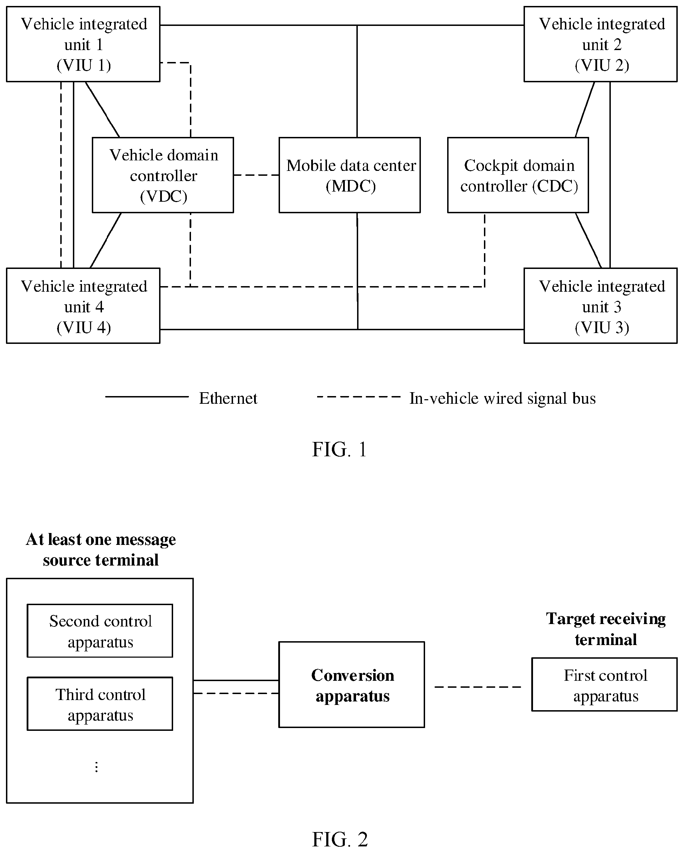

FIG. 1 is a diagram of an architecture of an in-vehicle communication system according to an embodiment of this application. As shown in FIG. 1, the system includes at least one domain controller (domain controller, DC) and at least one vehicle integrated unit (vehicle integrated unit, VIU).

The vehicle integrated unit VIU is configured to manage an electronic control unit (electronic control unit, ECU) in an area. The VIU may provide nearby access to corresponding sensors, actuators, or ECUs to implement functions such as power supply, electronic fuse, and I/O port isolation. In addition, the VIU has some or all functions of a gateway, for example, a protocol conversion function, a protocol encapsulation and forwarding function, and a data format conversion function. When the VIU integrates an ECU function of some vehicle parts, the VIU also has an electronic control function for controlling the corresponding vehicle parts.

Each functional domain in a vehicle may have an independent domain controller. The domain controller may be understood as a general term of a system including domain main control hardware, an operating system, an algorithm, application software, and other parts. In FIG. 1, the at least one DC includes a vehicle domain controller (vehicle domain controller, VDC), a mobile data center (mobile data center, MDC), and a cockpit domain controller (cockpit domain controller, CDC). The VDC is configured to provide services for a vehicle part in a vehicle body domain and a vehicle part in a chassis domain, the MDC is configured to provide a service for a vehicle part that implements an automatic driving function, and the CDC is configured to provide a service for a vehicle part in a cockpit domain. In some possible embodiments, the MDC may also be referred to as an advanced driving assistance system domain controller (advanced driving assistance system domain controller, ADAS DC) or an automatic driving domain controller (automatic drive domain controller, AD DC).

Herein, the in-vehicle communication system shown in FIG. 1 adopts hybrid networking. That is, a combination of an Ethernet and an in-vehicle wired signal bus is used for networking. The Ethernet is configured to implement service-oriented communication, and the in-vehicle wired signal bus is configured to implement signal-oriented communication. In other words, main functions in the vehicle are provided to a local application or a cross-domain application in a form of a service through the Ethernet, so that decoupling of software and hardware and flexible deployment of functions may be implemented to some extent. Signal-based communication is implemented between individual domain controllers (for example, domain controllers that have a high requirement on security of a power chassis) in the vehicle through the in-vehicle wired signal bus. For example, the in-vehicle wired signal bus includes at least one of the CAN bus, the LIN bus, and the FlexRay bus.

In FIG. 1, a VIU communicates with another VIU through at least one of the Ethernet and the in-vehicle wired signal bus. For example, a VIU 1 may communicate with another VIU in FIG. 1 through the Ethernet, and the VIU 1 may further communicate with a VIU 2 through the in-vehicle wired signal bus. For another example, the VIU 2 communicates with a VIU 3 through the Ethernet.

In FIG. 1, a DC may communicate with another DC, and a DC may communicate with a VIU through at least one of the Ethernet and the in-vehicle wired signal bus. For example, the VDC may communicate with the VIU 1 both through the Ethernet and through the in-vehicle wired signal bus. For another example, the MDC communicates with the VIU 1 through the Ethernet, and the VDC may communicate with the MDC through the in-vehicle wired signal bus.

In some possible embodiments, the in-vehicle communication system shown in FIG. 1 further includes a telematics box (telematics box, TBOX). The TBOX may communicate with the vehicle integrated unit and/or the domain controller through the CAN bus, for example, for transferring information or an instruction, including vehicle status information, key status information, a control instruction, and the like.

The three types of domain controllers shown in FIG. 1 are merely examples. In some possible embodiments, logical functions of a plurality in the VDC, the MDC, and the CDC may be further integrated. For example, integration is performed on the MDC and the CDC to obtain a domain controller that can provide an automatic driving control function and a cockpit control function. For another example, integration is performed on the VDC and the CDC to obtain a domain controller that can provide a vehicle body control function and a cockpit control function. For another example, integration is performed on the VDC and the MDC to obtain a domain controller that can provide a vehicle body control function and an automatic driving control function.

The in-vehicle communication system shown in FIG. 1 may be used in an automatic driving vehicle, a conventional vehicle, a new energy vehicle, or the like. The conventional vehicle is a fuel-type vehicle, for example, may be a gasoline vehicle, a diesel vehicle, or the like. The new energy vehicle may be, for example, an electric vehicle (electric vehicle, EV), a hybrid electric vehicle (hybrid electric vehicle, HEV), a range extended electric vehicle (range extended EV), a plug-in hybrid electric vehicle (plug-in HEV), a fuel cell vehicle, or another new energy vehicle. This is not specifically limited herein.

It should be noted that FIG. 1 is merely an example of the diagram of the architecture, and does not limit communication connection lines between network elements to be merely in the form shown in FIG. 1, and does not limit a quantity of network elements included in the system shown in FIG. 1. Although not shown in FIG. 1, another functional entity may further be included in FIG. 1 in addition to the functional entities shown in FIG. 1. In addition, the method provided in embodiments of this application may be applied to the communication system shown in FIG. 1. Certainly, the method provided in embodiments of this application may also be applied to another communication system. This is not limited in embodiments of this application.

FIG. 2 is a diagram of a communication system according to an embodiment of this application. In FIG. 2, the system is used to implement packet conversion of an in-vehicle network. The system includes a conversion apparatus, at least one message source terminal, and a target receiving terminal. The conversion apparatus, the at least one message source terminal, and the target receiving terminal are deployed in a same vehicle. The at least one message source terminal may communicate with the conversion apparatus through an Ethernet and/or an in-vehicle wired signal bus, and the target receiving terminal communicates with the conversion apparatus through the in-vehicle wired signal bus.

The conversion apparatus may be deployed on any vehicle integrated unit or any domain controller of the vehicle. The conversion apparatus may be a component in the vehicle integrated unit or a component in the domain controller. The component may be, for example, at least one of a chip, an integrated circuit, and the like.

The target receiving terminal may be deployed on the vehicle integrated unit, the domain controller, or a TBOX. Herein, when the target receiving terminal is deployed on the vehicle integrated unit or the domain controller, the target receiving terminal and the conversion apparatus are deployed on different vehicle integrated units or domain controllers. In FIG. 2, the target receiving terminal may be a first control apparatus. The first control apparatus may be a component in any one of the vehicle integrated unit, the domain controller, and the TBOX. The component may be, for example, at least one of a chip, an integrated circuit, and the like.

The at least one message source terminal is also deployed in at least one of the vehicle integrated unit and the domain controller. One or more of the at least one message source terminal may be deployed with the conversion apparatus on a same vehicle integrated unit or domain controller, or may be deployed with the conversion apparatus on different vehicle integrated units or domain controllers. In FIG. 2, the at least one message source terminal includes a second control apparatus and a third control apparatus. The second control apparatus or the third control apparatus may be a component in any one of the vehicle integrated unit and the domain controller. The component may be, for example, a chip or an integrated circuit.

For example, the conversion apparatus is deployed on the VIU 1 in FIG. 1, the first control apparatus is deployed on the VDC in FIG. 1, the second control apparatus is deployed on the VIU 4 in FIG. 1, and the third control apparatus is deployed on the MDC in FIG. 1.

In FIG. 2, the conversion apparatus obtains an original message from the at least one message source terminal. The target receiving terminal does not support a communication protocol corresponding to the original message. Therefore, the conversion apparatus converts the original message based on a feature of the vehicle, for example, may obtain a converted packet, and send the converted packet to the target receiving terminal. The target receiving terminal supports a communication protocol corresponding to the converted packet. A type of the original message may be, for example, an application programming interface API message, a type of the converted packet is an in-vehicle wired signal, and the converted packet may be any one of a CAN packet, an LIN packet, and a FlexRay packet. A format of the converted packet may be applied to a plurality of different vehicles. For details of the converted packet, refer to related descriptions in the following method embodiments. Details are not described herein again.

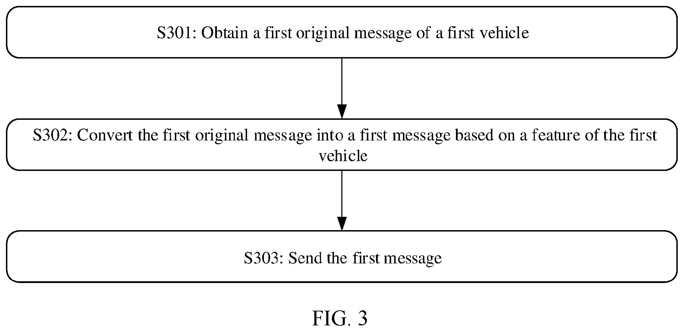

FIG. 3 is a flowchart of a packet conversion method according to an embodiment of this application. The method is applied to a conversion apparatus. The conversion apparatus may be, for example, the conversion apparatus shown in FIG. 2. The method includes but is not limited to the following steps.

S301: Obtain a first original message of a first vehicle.

The first original message includes at least one message, and a type of the first original message includes at least one of an application programming interface (application programming interface, API) message and an in-vehicle wired signal.

Further, the API message includes at least one of the following types: an API message corresponding to a SOME/IP-based service and an API message corresponding to an in-vehicle wired signal-based service. Herein, the in-vehicle wired signal includes at least one of a CAN signal, a LIN signal, a FlexRay signal, and the like.

For example, when the type of the first original message includes the in-vehicle wired signal, the first original message includes at least one of the following: at least one CAN packet, at least one LIN packet, and at least one FlexRay packet.

The SOME/IP-based service indicates a service component presented externally by using SOME/IP, for example, may be an atomic service, a composite service, or an application service. The SOME/IP-based service may be understood as a local native service in an SOA.

For example, if the SOME/IP-based service is a service of a vehicle body domain, a vehicle part such as a wiper or a rear view mirror in the vehicle body domain may be directly adjusted by using the SOME/IP-based service. If the SOME/IP-based service is a service of a cockpit domain, a vehicle part such as a seat or a camera in the cockpit domain may be directly adjusted by using the SOME/IP-based service.

The in-vehicle wired signal-based service is to provide the in-vehicle wired signal as a service. That is, a hardware resource such as a sensor, an actuator, or a legacy electronic control unit (legacy ECU) is abstracted to interact with the outside through an API.

For example, an electronic stability program (electronic stability program, ESP) controller accesses an in-vehicle network through an in-vehicle bus, and the ESP controller has a control function, but an ESP signal sent by the ESP controller may be abstracted as an API to implement interaction with the outside.

In an implementation, when the type of the first original message is the API message, if the first original message includes a first API message and a second API message, the first API message and the second API message may correspond to a same service, or may correspond to different services. This is not specifically limited herein.

For example, that the first API message and the second API message correspond to a same service may be as follows: Both the first API message and the second API message correspond to a service 1. A type of the service 1 is the SOME/IP-based service or the in-vehicle wired signal-based service.

For example, that the first API message and the second API message correspond to different services may be as follows: The first API message corresponds to the service 1, and the second API message corresponds to a service 2. The service 1 and the service 2 may be two services of different types. For example, the type of the service 1 is the SOME/IP-based service, and a type of the service 2 is the in-vehicle wired signal-based service. Alternatively, the service 1 and the service 2 may be two different services of a same type. For example, both the type of the service 1 and the type of the service 2 are the in-vehicle wired signal-based service.

Further, in this case (that is, the type of the first original message is the API message, and the first original message includes the first API message and the second API message), a manner in which the conversion apparatus obtains the first original message may be, for example, Manner 1 or Manner 2.

Manner 1: Obtain the first original message from two different message source terminals.

Specifically, the obtaining the first original message includes: receiving the first API message from a second control apparatus of the first vehicle, and receiving the second API message from a third control apparatus of the first vehicle.

Deployment of the conversion apparatus, the second control apparatus, and the third control apparatus on the first vehicle includes a plurality of cases below.

Case 1: The conversion apparatus, the second control apparatus, and the third control apparatus are all deployed on a same domain controller or a same vehicle integrated unit.

Case 2: The conversion apparatus is deployed on a domain controller or a vehicle integrated unit, and the second control apparatus and the third control apparatus are deployed on a same domain controller or a same vehicle integrated unit, but the domain controller or the vehicle integrated unit on which the conversion apparatus is deployed is different from the domain controller or the vehicle integrated unit on which the second control apparatus is deployed.

For example, the conversion apparatus is deployed on a domain controller 1 or a vehicle integrated unit 1, and both the second control apparatus and the third control apparatus are deployed on a domain controller 2 or a vehicle integrated unit 2.

Case 3: The conversion apparatus, the second control apparatus, and the third control apparatus are respectively deployed on different domain controllers and/or different vehicle integrated units.

For example, the conversion apparatus is deployed on a domain controller 1 or a vehicle integrated unit 1, the second control apparatus is deployed on a domain controller 2 or a vehicle integrated unit 2, and the third control apparatus is deployed on a domain controller 3 or a vehicle integrated unit 3.

**Manner 2: Obtain the first original message from one message source terminal.**

Specifically, the obtaining the first original message includes: receiving the first API message and the second API message from a fourth control apparatus of the first vehicle.

The fourth control apparatus and the conversion apparatus may be deployed on a same domain controller or a same vehicle integrated unit of the first vehicle, or may be deployed on different domain controllers or different vehicle integrated units of the first vehicle. For example, the conversion apparatus is deployed on a domain controller 1 or a vehicle integrated unit 1, and the fourth control apparatus is deployed on a domain controller 2 or a vehicle integrated unit 2.

In an implementation, when the type of the first original message is the in-vehicle wired signal, the first original message includes at least one of the following content:

at least one CAN packet;
at least one LIN packet; and
at least one FlexRay packet.

For example, the at least one CAN packet is obtained by the conversion apparatus from a legacy ECU accessed through a CAN bus, the at least one LIN packet is obtained by the conversion apparatus from a legacy ECU accessed through a LIN bus, and the at least one FlexRay packet is obtained by the conversion apparatus from a legacy ECU accessed through a FlexRay bus. It may be understood that the first original message may be obtained by the conversion apparatus from at least one message source terminal.

In another implementation, the type of the first original message includes the API message and the in-vehicle wired signal. In this case, for specific content of the first original message, refer to the related descriptions that the type of the first original message is the API message and the type of the first original message is the in-vehicle wired signal. Details are not described herein again.

S302: Convert the first original message into a first message based on a feature of the first vehicle.

The feature of the first vehicle includes at least one of the following features: a vehicle model of the first vehicle, configuration information of the first vehicle, a manufacturer of the first vehicle, component information of the first vehicle, and the like. For example, the configuration information of the first vehicle may be a software configuration and/or a hardware configuration. For example, the hardware configuration of the first vehicle may be classified into three types: a basic configuration, an intermediate configuration, and an advanced configuration. Herein, a user may sense the configuration information of the first vehicle.

The first message is included in a first converted packet, the first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message.

Herein, that at least one first signal in the first valid signal is associated with the first message may be understood as follows: The at least one first signal in the first valid signal belongs to the first message.

Herein, the plurality of signals in the first converted packet are a largest set of signals corresponding to features of a plurality of vehicles.

For example, the plurality of signals in the first converted packet may be obtained by the conversion apparatus in advance from at least one original equipment manufacturer (original equipment manufacturer, OEM).

The first valid signal corresponds to the feature of the first vehicle. Therefore, the at least one first signal in the first valid signal corresponds to the feature of the first vehicle. For example, a correspondence between the at least one first signal in the first valid signal and the feature of the first vehicle may be obtained by the conversion apparatus in advance from the OEM. In some possible embodiments, the conversion apparatus may further determine, based on information sent by the OEM, that the first invalid signal does not correspond to the feature of the first vehicle, and that the first invalid signal corresponds to the vehicle (for example, a vehicle 2) other than the first vehicle.

Herein, the first invalid signal in the first converted packet is marked as a default value or is marked by default in a manner of embedding code, to indicate that the first vehicle does not use the first invalid signal.

In other words, the first valid signal is a signal that can be used by the first vehicle or a signal that needs to be used by the first vehicle, and the first invalid signal is a signal that cannot be used by the first vehicle or a signal that is not used by the first vehicle, but the first invalid signal can be used by the vehicle other than the first vehicle. Therefore, it may be learned that a format of the first converted packet may be applied to different vehicles.

It may be understood that a type of the first message is the same as the type of the first converted packet. The type of the first converted packet is related to a communication protocol supported by a first control apparatus in the first vehicle. Herein, the first control apparatus is a receive object of the first converted packet. The first control apparatus and the conversion apparatus are deployed on different domain controllers or different vehicle integrated units. For example, the conversion apparatus is deployed on a domain controller A or a vehicle integrated unit B, and the first control apparatus is deployed on a domain controller C or a vehicle integrated unit D. In addition, the first control apparatus and a message source terminal of the first original message are also deployed on different domain controllers or different vehicle integrated units.

For example, if the first control apparatus supports only a CAN communication protocol, the type of the first converted packet is specifically CAN, and the type of the first message is also CAN. If the first control apparatus supports only a LIN communication protocol, the type of the first converted packet is specifically LIN, and the type of the first message is also LIN. If the first control apparatus supports only a FlexRay communication protocol, the type of the first converted packet is specifically FlexRay, and the type of the first message is also FlexRay. In some possible embodiments, if the first control apparatus supports at least one of the CAN communication protocol, the LIN communication protocol, and the FlexRay communication protocol, the type of the first converted packet may be determined according to an actual requirement of the first control apparatus.

In an implementation, when the type of the first original message includes the application programming interface API message, the at least one first signal in the first valid signal corresponds to at least one API parameter in the first original message.

Herein, that the at least one first signal in the first valid signal corresponds to at least one API parameter in the first original message includes at least one of the following cases:

one first signal in the first valid signal corresponds to one API parameter in the first original message;
one first signal in the first valid signal corresponds to a plurality of API parameters in the first original message; and
a plurality of first signals in the first valid signal correspond to one API parameter in the first original message.

For example, when the first original message includes a plurality of API parameters, the plurality of API parameters may come from a same API message in the first original message, or may come from different API messages in the first original message. Correspondingly, the plurality of API parameters may belong to a same service, or may belong to different services. When the plurality of API parameters belong to different services, a scheduling periodicity of a software component (software component, SWC) in which the plurality of different services are located is the same as a scheduling periodicity of the conversion apparatus, for example, is updated every 10 milliseconds. In this way, duplicate data or aged data in the first message may be prevented.

Herein, a correspondence between the at least one first signal and the at least one API parameter may be preset by the user based on experience, or may be learned through training by using an artificial intelligence algorithm. This is not specifically limited herein. The following describes the correspondence between the at least one first signal and the at least one API parameter based on a fact that the first converted packet is a CAN packet.

The following uses some examples to describe as follows: One first signal corresponds to one API parameter.

For example, a first signal (a CAN signal) "VIU_HighBeamIndReq" corresponds to an API parameter "High-BeamIndicatorReq". Both the CAN signal "VIU _HighBeamIndReq" and the "HighBeamIndicatorReq" parameter indicate a request of a function indicator light of a high beam light.

For example, a first signal (a CAN signal) "VIU_BMS_FaultLevel" corresponds to an API parameter "HvBattFltSt". "VIU_BMS_FaultLevel" indicates a fault level of a battery management system (battery management system, BMS) on a VIU, and the "HvBattFltSt" parameter indicates a fault status of a high-voltage battery.

For example, a first signal (a CAN signal) "VIU_EPS_FaultState" corresponds to an API parameter "EPS_FltIncn". "VIU_EPS_FaultState" indicates a fault status of an electric power steering (electric power steering, EPS) system on a VIU, and the "EPS_FltIncn" parameter indicates a fault indication of the EPS.

The following uses a specific example to describe as follows: One first signal corresponds to a plurality of API parameters. For example, a first signal (a CAN signal) "VIU_BMS_ACChrgSt" corresponds to an API parameter 1 "EMS_PortConnectStatus" and an API parameter 2 "EMS_ChargeSt". The "VIU_BMS_ACChrgSt" signal indicates an alternating current charging status of a BMS on a VIU, the "EMS_PortConnectStatus" parameter indicates an interface connection status of an engine management system (engine management system, EMS), and the "EMS_ChargeSt" parameter indicates a charging status of the EMS.

In some possible embodiments, the first signal in the first valid signal includes at least one first state, a first API parameter in the first original message corresponds to the first signal, the first API parameter includes at least one second state, and a mapping rule between the at least one first state and the at least one second state satisfies at least one of the following cases:

mapping is performed based on a similarity between physical meanings of states; and
a quantity of the at least one first state is different from a quantity of the at least one second state, and mapping is performed based on a preset ratio, where the preset ratio is obtained based on the quantity of the at least one first state and the quantity of the at least one second state.

Herein, that the first signal includes at least one first state means that the first signal may be represented by a field, a binary value, or the like, and different preset values of the first signal may represent a plurality of first states, but a value of the first signal at any moment may be only one of a plurality of preset values to represent one first state. Correspondingly, for that the first API parameter includes at least one second state, refer to the description that the first signal includes at least one first state. Details are not described herein again.

For example, the at least one first state of the first signal includes a state 1, a state 2, and a state 3. When the first signal takes a first preset value, it indicates the state 1; when the first signal takes a second preset value, it indicates the state 2; and when the first signal takes a third preset value, it indicates the state 3.

For example, a mapping relationship between the at least one first state and the at least one second state may be preconfigured by the user on the conversion apparatus according to the mapping rule, or may be learned through training by using an artificial intelligence algorithm. This is not specifically limited herein.

The following uses some examples to specifically describe as follows: Mapping is performed based on a similarity between physical meanings of states.

Example 1: The "VIU _HighBeamIndReq" signal corresponds to the "HighBeamIndicatorReq" parameter. To be specific, the first signal is "VIU _HighBeamIndReq", and the first API parameter is the "HighBeamIndicatorReq" parameter.

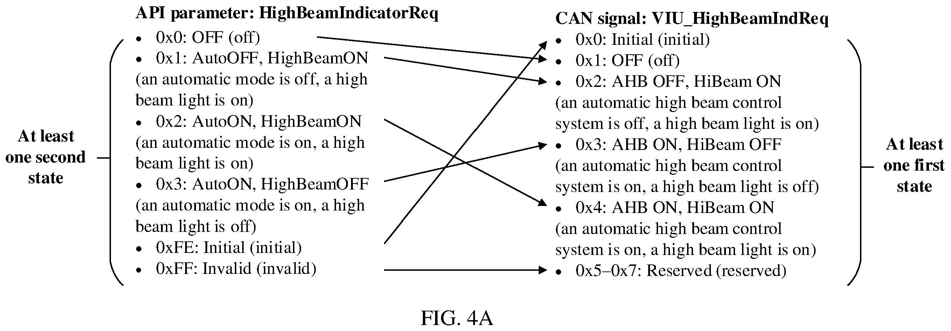

FIG. 4A is a state mapping diagram according to an embodiment of this application. In FIG. 4A, at least one first state of the "VIU _HighBeamIndReq" signal includes an Initial (initial) state indicated by 0x0, an OFF (off) state indicated by 0x0, an AHB OFF, HiBeam ON (an automatic high beam control system is off, a high beam light is on) state indicated by 0x2, an AHB ON, HiBeam OFF (an automatic high beam control system is on, a high beam light is off) state indicated by 0x3, an AHB ON, HiBeam ON (an automatic high beam control system is on, a high beam light is on) state indicated by 0x4, and a Reserved (reserved) state indicated by 0x5-0x7. At least one second state of the "HighBeamIndicatorReq" parameter includes an OFF (off) state indicated by 0x0, an AutoOFF, HighBeamON (an automatic mode is off, a high beam light is on) state indicated by 0x1, an AutoON, HighBeamON (an automatic mode is on, a high beam light is on) state indicated by 0x2, an AutoON, HighBeamOFF (an automatic mode is on, a high beam light is off) state 0x3 indicated by 0xFE, an Initial (initial) state indicated, and an Invalid (invalid) state indicated by 0xFF.

Based on the similarity between the physical meanings of the states of the two parties shown in FIG. 4A, it may be learned that "0x0: Initial" in the at least one first state corresponds to "0xFE: Initial" in the at least one second state, "0x1: OFF" in the at least one first state corresponds to "0x0: OFF" in the at least one second state, "0x2: AHB OFF, HiBeam ON" in the at least one first state corresponds to "0x1: AutoOFF, HighBeamON" in the at least one second state, "0x3: AHB ON, HiBeam OFF" in the at least one first state corresponds to "0x3: AutoON, HighBeamOFF" in the at least one second state, "0x4: AHB ON, HiBeam ON" in the at least one first state corresponds to "0x2: AutoON, HighBeamON" in the at least one second state, and "0x5-0x7: Reserved" in the at least one first state corresponds to "0xFF: Invalid" in the at least one second state.

Example 2: The "VIU_EPS_FaultState" signal corresponds to the "EPS_FltIncn" parameter. To be specific, the first signal is "VIU_EPS_FaultState", and the first API parameter is the "EPS_FltIncn" parameter.

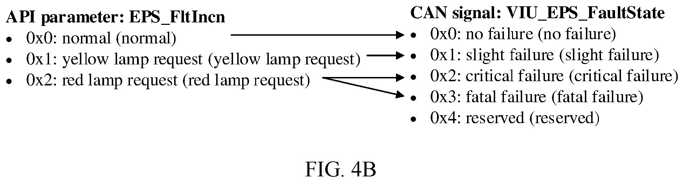

FIG. 4B is a state mapping diagram according to an embodiment of this application. In FIG. 4B, at least one first state of the "VIU_EPS_FaultState" signal includes a no failure (no failure) state indicated by 0x0, a slight failure (slight failure) state indicated by 0x1, a critical failure (critical failure) state indicated by 0x2, a fatal failure (fatal failure) state indicated by 0x3, and a reserved (reserved) state indicated by 0x4. At least one second state of the "EPS_FltIncn" parameter includes a normal (normal) state indicated by 0x0, a yellow lamp request (yellow lamp request) state indicated by 0x1, and a red lamp request (red lamp request) state indicated by 0x2.

It may be learned that a fault level division granularity of the "EPS_FltIncn" parameter shown in FIG. 4B is coarser than a fault level division granularity of the "VIU_EPS_FaultState" CAN signal, and "0x0: normal" in the at least one second state corresponds to "0x0: no failure" in the at least one first state, "0x1: yellow lamp request" in the at least one second state corresponds to "0x1: slight failure" in the at least one first state, and "0x2: red lamp request" in the at least one second state may correspond to both "0x2: critical failure" and "0x3: fatal failure" in the at least one first state. It may be understood that, when a fault level division granularity of a bus signal (which is used as an output) is finer than a fault level division granularity of an API parameter (which is used as an input), original information of the API parameter is not lost.

For example, if the first original message includes the API parameter "EPS_FltIncn", and a value of the API parameter "EPS_FltIncn" is 0x2 indicating the red lamp request (red lamp request), because "0x2: red lamp request" in FIG. 4B corresponds to "0x2: critical failure" and "0x3: fatal failure", the first converted packet includes the "VIU_EPS_FaultState" signal, and a value of the "VIU_EPS_FaultState" signal is 0x2 indicating the critical failure (critical failure) state or 0x3 indicating the fatal failure (fatal failure) state. This is not specifically limited herein.

Example 3: The "VIU_BMS_ACChrgSt" signal corresponds to the "EMS_PortConnectStatus" parameter and the "EMS_ChargeSt" parameter. To be specific, the first signal is "VIU_BMS_ACChrgSt", and the first API parameters include the "EMS_PortConnectStatus" parameter and the "EMS_ChargeSt" parameter.

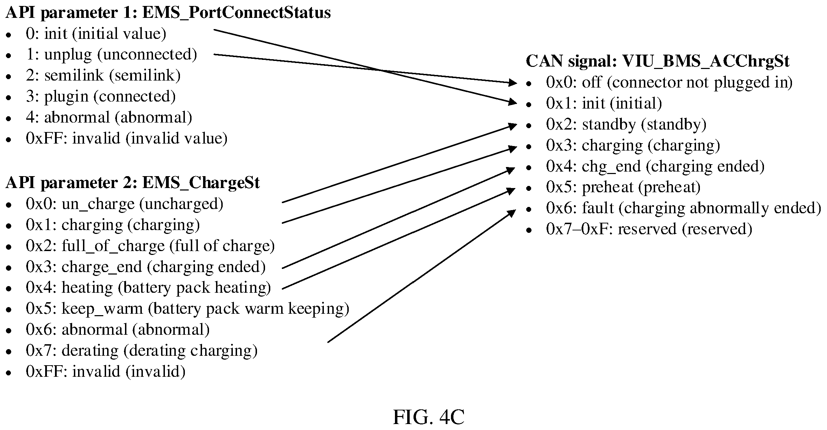

FIG. 4C is a state mapping diagram according to an embodiment of this application. In FIG. 4C, an appropriate state needs to be selected from a plurality of second states of two different API parameters for mapping. At least one first state of the "VIU_BMS_ACChrgSt" signal includes an off (connector not plugged in) state indicated by 0x0, an init (initial) state indicated by 0x1, a standby (standby) state indicated by 0x2, a charging (charging) state indicated by 0x3, a chg_end (charging ended) state indicated by 0x4, a preheat (preheat) state indicated by 0x5, a fault (charging abnormally ended) state indicated by 0x6, and a reserved (reserved) state indicated by 0x7-0xF. At least one second state includes a plurality of second states of EMS_PortConnectStatus (the API parameter 1) and a plurality of second states of EMS_ChargeSt (the API parameter 2). The plurality of second states of the API parameter 1 include an init (initial value) state indicated by 0, an unplug (unconnected) state indicated by 1, a semilink (semilink) state indicated by 2, a plugin (connected) state indicated by 3, an abnormal (abnormal) state indicated by 4, and an invalid (invalid value) state indicated by 0xFF. The plurality of second states of the API parameter 2 include an un_charge (uncharged) state indicated by 0x0, a charging (charging) state indicated by 0x1, a full_of_charge (full charge) state indicated by 0x2, a charge_end (charging ended) state indicated by 0x3, a heating (battery pack heating) state indicated by 0x4, a keep_warm (battery pack warm keeping) state indicated by 0x5, an abnormal (abnormal) state indicated by 0x6, a derating (derating charging) state indicated by 0x7, and an invalid (invalid) state indicated by 0xFF.

Based on the similarity between the physical meanings of the states of the two parties shown in FIG. 4C, it may be learned that "0x0: off" of the "VIU_BMS_ACChrgSt" signal corresponds to "1: unplug" of the API parameter 1, "0x1: init" of the "VIU_BMS_ACChrgSt" signal corresponds to "0: init" of the API parameter 1, "0x2: standby" of the "VIU_BMS_ACChrgSt" signal corresponds to "0x0: un_charge" of the API parameter 2, "0x3: charging" of the "VIU_BMS_ACChrgSt" signal corresponds to "0x1: charging" of the API parameter 2, "0x4: chg_end" of the "VIU_BMS_ACChrgSt" signal corresponds to "0x3: charge_end" of the API parameter 2, "0x5: preheat" of the "VIU_BMS_ACChrgSt" signal corresponds to "0x4: heating" of the API parameter 2, and "0x6: fault" of the "VIU_BMS_ACChrgSt" signal corresponds to "0x6: abnormal" of the API parameter 2.

For example, if the first original message includes the API parameter 1 "EMS_PortConnectStatus", and a value of the API parameter 1 "EMS_PortConnectStatus" is 1 indicating the unplug (unconnected) state, because "1: unplug" corresponds to "0x0: off" in FIG. 4C, the first converted packet includes the "VIU_BMS_ACChrgSt" signal, and a value of the "VIU_BMS_ACChrgSt" signal is 0x0 indicating the off (connector not plugged in) state.

For example, if the first original message includes the API parameter 1 "EPS_FltIncn" and the API parameter 2 "EMS_ChargeSt", and a value of "EPS_FltIncn" is 3 indicating the plugin (connected) state, and a value of "EMS_ChargeSt" is 0x4 indicating the heating (battery pack heating) state, because "3: plugin" does not have a mapped state while "0x4: heating" corresponds to "0x5: preheat" in FIG. 4C, the first converted packet includes the "VIU_BMS_ACChrgSt" signal, and a value of the "VIU_BMS_ACChrgSt" signal is 0x5 indicating the preheat (preheat) state.

The following uses an example to specifically describe as follows: State mapping is performed based on the preset ratio.

In an implementation, the quantity of the at least one second state is greater than the quantity of the at least one first state. That is, a fault level division granularity of the first API parameter is finer than a fault level division granularity of the first signal. In this case, that the preset ratio is obtained based on the quantity of the at least one first state and the quantity of the at least one second state includes: The preset ratio is a ratio of the quantity of the at least one first state to the quantity of the at least one second state.

It may be understood that, that mapping is performed based on the preset ratio indicates that the at least one first state of the first signal and the at least one second state of the first API parameter may be quantized. For example, fault levels of both the at least one first state of the first signal and the at least one second state of the first API parameter may be quantized.

For example, the "VIU_BMS_FaultLevel" signal corresponds to the "HvBattFltSt" parameter. To be specific, the first signal is "VIU_BMS_FaultLevel", and the first API parameter is the "HvBattFltSt" parameter.

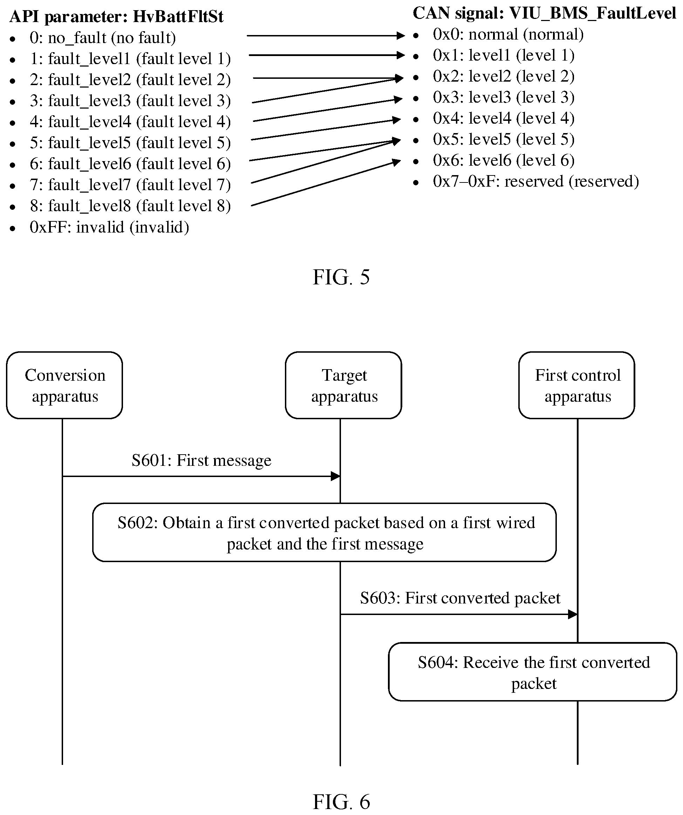

FIG. 5 is another state mapping diagram according to an embodiment of this application. In FIG. 5, at least one first state of the "VIU_BMS_FaultLevel" signal includes a normal (normal) state indicated by 0x0, a level1 (level 1) state indicated by 0x1, a level2 (level 2) state indicated by 0x2, a level3 (level 3) state indicated by 0x3, a level4 (level 4) state indicated by 0x4, a level5 (level 5) state indicated by 0x5, a level6 (level 6) state indicated by 0x6, and a reserved (reserved) state indicated by 0x7-0xF. At least one second state of the "HvBattFltSt" parameter includes a no_fault (no fault) state indicated by 0, a fault_level1 (fault level 1) state indicated by 1, a fault_level2 (fault level 2) state indicated by 2, a fault_level3 (fault level 3) state indicated by 3, a fault_level4 (fault level 4) state indicated by 4, a fault_level5 (fault level 5) state indicated by 5, a fault_level6 (fault level 6) state indicated by 6, a fault_level7 (fault level 7) state indicated by 7, a fault_level8 (fault level 8) state indicated by 8, and an invalid (invalid) state indicated by 0xFF.

In FIG. 5, it may be learned that a quantity of the at least one second state of the "HvBattFltSt" parameter is greater than a quantity of the at least one first state of the "VIU_BMS_FaultLevel" signal. That is, a fault level division granularity of the "HvBattFltSt" parameter is finer than a fault level division granularity of the "VIU_BMS_FaultLevel" signal. To ensure that original information of the "HvBattFltSt" parameter is not lost, each fault level of the "HvBattFltSt" parameter corresponds to a fault level of the "VIU_BMS_FaultLevel" signal, and mapping may be performed based on the preset ratio. In FIG. 5, it is assumed that both fault severities of "fault_level1" to "fault_level8" and fault severities of "level1" to the "level6" increase level by level, the preset ratio may be a ratio of the quantity of the at least one first state to the quantity of the at least one second state, that is, $\frac{6}{8}$. In this case, for a mapping process between the eight fault levels of the "HvBattFltSt" parameter and the six fault levels of the "VIU_BMS_FaultLevel" signal, refer to Table 1 below.

Table 1 shows a correspondence between fault levels of the "HvBattFltSt" parameter and fault levels of the "VIU_BMS_FaultLevel" signal. Specifically, Table 1 shows a correspondence among a fault level used as an input (namely, a fault level of the API parameter "HvBattFltSt"), a level value obtained through multiplication by the preset ratio, a level conversion value, and a fault level used as an output (namely, the fault level of the CAN signal "VIU_BMS_FaultLevel").

The preset ratio is $\frac{6}{8}$. The correspondence "1-0.75-1-1" in Table 1 is used as an example for description. The input fault level is the fault level 1 of "HvBattFltSt", the level value obtained through multiplication by the preset ratio is 0.75, and the level conversion value 1 is obtained by rounding 0.75. It indicates that the fault level 1 of the "HvBattFltSt" parameter corresponds to the fault level 1 of the "VIU_BMS_FaultLevel" signal. It may be understood that, for other correspondences in Table 1, refer to the description of the correspondence "1-0.75-1-1". Details are not described herein again.

**Table 1**

| Fault level (input) ("HvBattFltSt") | Level value obtained through multiplication by the preset ratio | Level conversion value (rounding) | Fault level (output) ("VIU_BMS_FaultLevel") |
|---|---|---|---|
| 1 | 0.75 | 1 | 1 |

(continued)

| Fault level (input) ("HvBattFltSt") | Level value obtained through multiplication by the preset ratio | Level conversion value (rounding) | Fault level (output) ("VIU_BMS_FaultLevel") |
|---|---|---|---|
| 2 | 1.5 | 2 | 2 |
| 3 | 2.25 | 2 | 2 |
| 4 | 3 | 3 | 3 |
| 5 | 3.75 | 4 | 4 |
| 6 | 4.5 | 5 | 5 |
| 7 | 5.25 | 5 | 5 |
| 8 | 6 | 6 | 6 |

In Table 1, "rounding" is used as an example of a calculation manner of the level conversion value. However, the calculation manner of the level conversion value is not limited to rounding only. In some possible embodiments, if the level value obtained through multiplication by the preset ratio is a non-integer value, the level conversion value may be obtained in a roundup manner.

It may be understood that Table 1 is merely used as an example to reflect the correspondence among the fault level used as the input, the level value obtained through multiplication by the preset ratio, the level conversion value, and the fault level used as the output. During actual application, text content and a storage manner of the correspondence may alternatively be in another form. This is not specifically limited herein.

Therefore, based on the mapping performed based on the preset ratio in Table 1, it may be learned that: "0: no_fault" of the "HvBattFltSt" parameter corresponds to "0x0: normal" of the "VIU_BMS_FaultLevel" signal, "1: fault_level1" of the "HvBattFltSt" parameter corresponds to "0x1: level1" of the "VIU_BMS_FaultLevel" signal, the "2: fault_level2" parameter of the "HvBattFltSt" parameter corresponds to "0x2: level2" of the "VIU_BMS_FaultLevel" signal, "3: fault_level3" of the "HvBattFltSt" parameter corresponds to "0x2: level2" of the "VIU_BMS_FaultLevel" signal, "4: fault_level4" of the "HvBattFltSt" parameter corresponds to "0x2: level2" of the "VIU_BMS_FaultLevel" signal, "5: fault_level5" of the "HvBattFltSt" parameter corresponds to "0x4: level4" of the "VIU_BMS_FaultLevel" signal, "6: fault_level6" of the "HvBattFltSt" parameter corresponds to "0x5: level5" of the "VIU_BMS_FaultLevel" signal, "7: fault_level7" of the "HvBattFltSt" parameter corresponds to "0x5: level5" of the "VIU_BMS_FaultLevel" signal, and "8: fault_level8" of the "HvBattFltSt" parameter corresponds to "0x6: level6" of the "VIU_BMS_FaultLevel" signal.

In some possible embodiments, the quantity of the at least one second state may alternatively be less than the quantity of the at least one first state. That is, a range granularity of the second state of the first API parameter is coarser than a quantization granularity of the first state of the first signal. In this case, the preset ratio is still the ratio of the quantity of the at least one second state to the quantity of the at least one first state. It may be understood that, when the range granularity of the second state of the first API parameter is the same as the quantization granularity of the first state of the first signal, the preset ratio is 1.

S303: Send the first message.

In an implementation, the sending the first message includes: when the first message is the first converted packet, sending the first message to the first control apparatus.

Herein, that the first message is the first converted packet indicates that each signal in the first valid signal belongs to the first message. Each signal in the first valid signal has a corresponding API parameter in the first original message. In other words, each signal in the first valid signal is obtained through mapping based on the corresponding API parameter in the first original message.

In an implementation, the sending the first message includes: sending the first message to a target apparatus of the first vehicle. A communication protocol stack is deployed on the target apparatus. In this case, after the target apparatus receives the first message, the target apparatus sends the first converted packet to the first control apparatus. For details about this embodiment, refer to the related description in FIG. 6 below. Details are not described herein again.

Further, when the first message is sent to the target apparatus of the first vehicle, the first converted packet further includes a first wired packet. The first wired packet is obtained through signal routing and reassembly based on a wired signal in the first vehicle, the first wired packet is related to the feature of the first vehicle, and at least one second signal in the first valid signal is associated with the first wired packet.

Herein, that at least one second signal in the first valid signal is associated with the first wired packet means that the at least one second signal in the first valid signal belongs to the first wired packet. It may be learned that, in this case, some signals in the first valid signal come from the first message, and some signals in the first valid signal come from the first wired packet. That is, the first valid signal is obtained in two manners. Specifically, the signal from the first message in the first valid signal is obtained through mapping and conversion based on the corresponding API parameter, and the signal from the first wired packet in the first valid signal is obtained through signal routing and reassembly on the in-vehicle wired signal.

It may be understood that a type of the first wired packet is the same as a type of the first converted packet. For details, refer to the related description in S302 in which the type of the first message is the same as the type of the first converted packet. Details are not described herein again.

It may be learned that, in embodiments of this application, different types of original messages may be converted into packets with a unified or fixed format according to a communication protocol supported by a target receiving terminal. This not only shields a difference between a plurality of different input signal sources, but also implements full quantization and platformization of an output packet, thereby facilitating packet reuse across vehicles.

In some possible embodiments, the packet conversion method may be applicable to different vehicles, for example, the first vehicle and a second vehicle. The feature of the first vehicle is different from a feature of the second vehicle. For example, the vehicle model of the first vehicle is different from a vehicle model of the second vehicle.

The following specifically describes how the packet conversion method provided in embodiments of this application can implement reuse across vehicles.

When the conversion apparatus is deployed on the first vehicle, the conversion apparatus obtains the first original message of the first vehicle, and generates the first message based on the first original message, where the first message is related to the feature of the first vehicle, and the first message is included in the first converted packet; and sends the first message. The first converted packet includes N signals (N is an integer greater than 1), the N signals include the first valid signal and the first invalid signal, the first valid signal corresponds to the feature of the first vehicle, the first invalid signal is the signal corresponding to the feature of the vehicle other than the first vehicle, the feature of the vehicle other than the first vehicle is different from the feature of the first vehicle, and the at least one first signal in the first valid signal is associated with the first message.

When the conversion apparatus is deployed on the second vehicle, the conversion apparatus obtains an original message of the second vehicle, and generates a second message based on the second original message, where the second message is related to a feature of the second vehicle, and the second message is included in a second converted packet; and sends the second message. The second converted packet includes the N signals, the N signals include a second valid signal and a second invalid signal, the second valid signal corresponds to the feature of the second vehicle, the second invalid signal is a signal corresponding to a feature of a vehicle other than the second vehicle, the feature of the vehicle other than the second vehicle is different from the feature of the second vehicle, at least one signal in the second valid signal is associated with the second message, the first valid signal and the second valid signal differ in terms of at least one signal, and the first invalid signal and the second invalid signal differ in terms of at least one signal.

For example, a signal 1 is one of the N signals. The signal 1 belongs to the first valid signal, and the signal 1 belongs to the second invalid signal.

It may be learned that, when the conversion apparatus is deployed on different vehicles, signals included in converted packets are the same. To be specific, names of the signals are the same and a quantity of the signals is the same. For example, the first converted packet includes N signals, and the second converted packet also includes the N signals. When the method is applied to different vehicles, among the N signals, based on a feature of a vehicle, a signal corresponding to the feature of the vehicle is used as a valid signal of the vehicle, and a signal not used by the vehicle is used as an invalid signal of the vehicle. In this way, converted packets with a unified format may be provided for different receiving terminals. This implements reuse across vehicles.

FIG. 6 is a flowchart of another packet conversion method according to an embodiment of this application. The method is applied to a communication system that includes a conversion apparatus, a target apparatus, and a first control apparatus. The conversion apparatus, the target apparatus, and the first control apparatus are deployed on a first vehicle. The conversion apparatus and the target apparatus are deployed on a same domain controller or a same vehicle integrated unit. The conversion apparatus and the first control apparatus are deployed on different domain controllers or different vehicle integrated units. A communication protocol stack is deployed on the target apparatus. The method includes but is not limited to the following steps.

S601: The conversion apparatus sends a first message to the target apparatus.

The first message is generated by the conversion apparatus based on a first original message of the first vehicle, and the first message is related to a feature of the first vehicle. For details about this step, refer to the descriptions in S301 and S302 in the embodiment in FIG. 3. Details are not described herein again.

Correspondingly, the target apparatus receives the first message sent by the conversion apparatus.

S602: The target apparatus obtains a first converted packet based on a first wired packet and the first message.

The first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, at least one first signal in the first valid signal is associated with the first message, at least one second signal in the first valid signal is associated with the first wired packet, and the first wired packet is associated with the feature of the first vehicle. For descriptions of the first message and the first wired packet, refer to related descriptions of corresponding content in FIG. 3. Details are not described herein again.

Herein, the plurality of signals in the first converted packet are a largest set of signals corresponding to features of a plurality of vehicles. For example, the plurality of signals in the first converted packet may be obtained by the target apparatus in advance from at least one original equipment manufacturer (original equipment manufacturer, OEM). In some possible embodiments, the target apparatus may further obtain a correspondence between a feature of each vehicle and a valid signal of the vehicle from the OEM.

Herein, the first wired packet may be obtained by the target apparatus through signal routing and reassembly on an obtained in-vehicle wired signal in the first vehicle based on the feature of the first vehicle. The first wired packet may be a CAN packet, a LIN packet, a FlexRay packet, or a packet of another in-vehicle wired signal class.

Herein, a type of the first message, a type of the first wired packet, and a type of the first converted packet are the same, and the type of the first message, the type of the first wired packet, and the type of the first converted packet are related to a communication protocol supported by the first control apparatus. For example, if the first control apparatus supports only a CAN communication protocol, the type of the first message is CAN, the type of the first wired packet is also CAN, and the type of the first converted packet is also CAN.

For example, a process of obtaining the first wired packet may be as follows: It is assumed that the first valid signal includes a signal 1, a signal 2, a signal 3, and a signal 4. The signal 1 and the signal 2 belong to the first message, but the first message does not include the signal 3 and the signal 4. The target apparatus may obtain the signal 3 and the signal 4 in a signal routing and reassembly manner. To be specific, the target apparatus obtains a CAN packet 1 through a CAN bus accessed by the target apparatus and obtains a LIN packet 1 through a LIN bus accessed by the target apparatus, where the CAN packet 1 includes the signal 3, and the LIN packet 1 includes the signal 4; and the target apparatus performs a signal routing and reassembly operation on the CAN packet 1 and the LIN packet 1 to obtain the first wired packet, where the first wired packet includes the signal 3 and the signal 4. Further, the target apparatus obtains the first converted packet based on the first message and the first wired packet. The target apparatus may obtain the signal 1 and the signal 2 from the first message and obtain the signal 3 and the signal 4 from the first wired packet.

In some possible embodiments, both the signal 3 and the signal 4 may be included in the LIN packet 1. In this case, a signal routing and reassembly operation may be performed only on the LIN packet 1 to obtain the first wired packet. Certainly, the signal 3 and the signal 4 may alternatively be included in the packet of the another in-vehicle wired signal class. This is not specifically limited herein.

S603: The target apparatus sends the first converted packet to the first control apparatus.

S604: The first control apparatus receives the first converted packet.

It may be learned that, in embodiments of this application, the conversion apparatus may be only configured to: convert the original message of the API message type based on the feature of the first vehicle to obtain the first message, and send the first message to the target apparatus on which the communication protocol stack is deployed. The target apparatus may output, with reference to the first message and the first wired packet that is obtained through signal routing and reassembly, a communication packet with a unified format. This not only shields a difference between a plurality of different input signal sources, but also implements full quantization and platformization of the output packet, thereby facilitating packet reuse across vehicles.

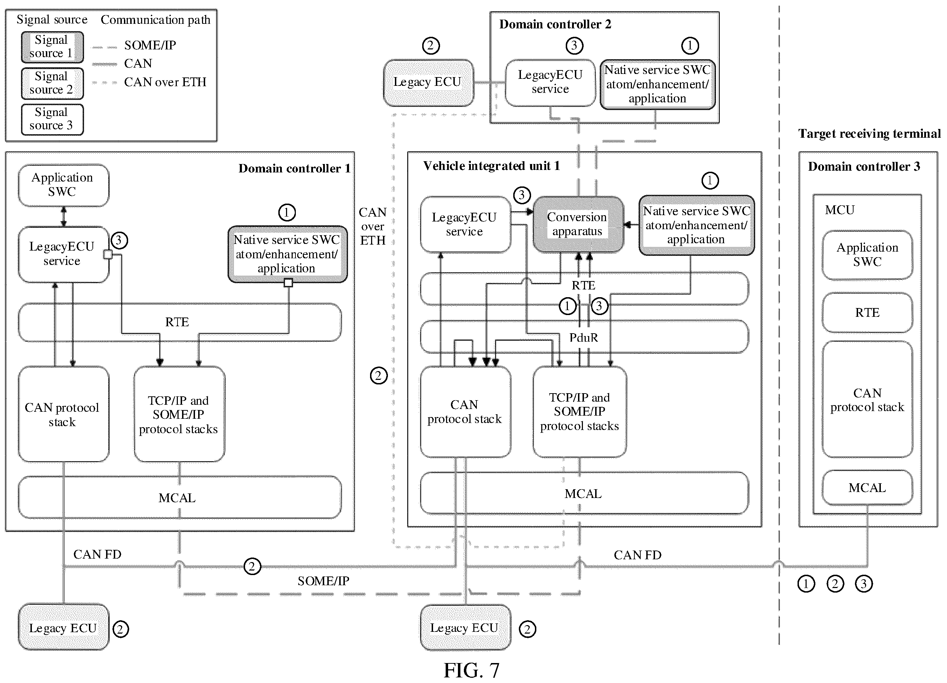

FIG. 7 is a diagram of a scenario in a first vehicle according to an embodiment of this application. FIG. 7 shows a process of transmitting information among a domain controller 1, a domain controller 2, a domain controller 3, and a vehicle integrated unit 1. For example, in FIG. 7, the conversion apparatus in the foregoing embodiments is deployed on the vehicle integrated unit 1, the message source terminal in the foregoing embodiments may be deployed on at least one of the domain controller 1, the domain controller 2, and the vehicle integrated unit 1, and the first control apparatus in the foregoing embodiments may be deployed on the domain controller 3. For example, the first control apparatus may be a microcontroller unit (microcontroller unit, MCU) in FIG. 7.

FIG. 7 shows three signal sources that may be used as inputs: a signal source 1, a signal source 2, and a signal source 3. The signal source 1 is an API message corresponding to a native service, the signal source 2 is a wired packet generated based on an in-vehicle wired signal (which is sent by a connected Legacy ECU), and the signal source 3 is an API message corresponding to an in-vehicle wired signal-based service (namely, a LegacyECU service). It may be learned from FIG. 7 that any one of the domain controller 1, the domain controller 2, and the vehicle integrated unit 1 may provide at least one of the three signal sources. Communication paths corresponding to different signal sources may be different. The communication paths include, for example, at least one of a path running a CAN protocol, a path running SOME/IP, a path running CAN over ETH, and the like.

The vehicle integrated unit 1 in FIG. 7 is used as an example to specifically describe an internal architecture of the vehicle integrated unit 1. A bottom layer is an MCU abstraction layer (microcontroller abstraction layer, MCAL). A CAN protocol stack, a SOME/IP protocol stack, and a TCP/IP protocol stack are deployed above MCAL. A protocol data unit router (protocol data unit router, PduR) layer is further deployed above the protocol stack. A runtime environment (runtime environment, RTE) layer is deployed above the PduR layer. Above the RTE layer, there is an application layer at which the LegacyECU service, the conversion apparatus, and the native service are located. For internal architectures of the domain controller 1, the domain controller 2, and the domain controller 3 in FIG. 7, refer to the related description of the vehicle integrated unit 1. Details are not described herein again.

In an implementation, signal sources (or referred to as message sources) obtained by the conversion apparatus are from different message source terminals.

For example, an API message 1 provided by a LegacyECU service or a native service on the domain controller 1 is transmitted to the conversion apparatus in the vehicle integrated unit 1 through SOME/IP, and an API message 2 provided by a native service or a LegacyECU service on the domain controller 2 is transmitted to the conversion apparatus in the vehicle integrated unit 1 through SOME/IP. The conversion apparatus converts the API message 1 and the API message 2 to obtain a first message, and sends the first message to the MCU in the domain controller 3 through a CAN bus when the first message is a first converted packet. For a packet conversion process, refer to the description in FIG. 3. In some possible embodiments, if the first message is not the first converted packet, the conversion apparatus may further send the first message to a lower-layer apparatus. Herein, the lower-layer apparatus may be, for example, an apparatus in which the CAN protocol stack is located.

For another example, an API message 1 provided by a LegacyECU service on the domain controller 1 is transmitted to the conversion apparatus in the vehicle integrated unit 1 through SOME/IP, and an API message 2 provided by a native service on the domain controller 1 is transmitted to the conversion apparatus in the vehicle integrated unit 1 through SOME/IP. Correspondingly, the conversion apparatus converts the API message 1 and the API message 2 to obtain a first message, and sends the first message to the MCU in the domain controller 3 through a CAN bus when the first message is a first converted packet. In some possible embodiments, if the first message is not the first converted packet, the conversion apparatus may further send the first message to a lower-layer apparatus.

For another example, an API message 1 provided by a LegacyECU service on the vehicle integrated unit 1 is transmitted to the conversion apparatus, and an API message 2 provided by a native service on the vehicle integrated unit 1 is transmitted to the conversion apparatus. Correspondingly, the conversion apparatus converts the API message 1 and the API message 2 to obtain a first message, and sends the first message to the MCU in the domain controller 3 through a CAN bus when the first message is a first converted packet. In some possible embodiments, if the first message is not the first converted packet, the conversion apparatus may further send the first message to a lower-layer apparatus.

In an implementation, signal sources (or referred to as message sources) obtained by the conversion apparatus are from a same message source terminal.

For example, an API message 1 provided by a LegacyECU service on the domain controller 1 is transmitted to the conversion apparatus in the vehicle integrated unit 1 through SOME/IP, and an API message 2 provided by the LegacyECU service on the domain controller 1 is transmitted to the conversion apparatus in the vehicle integrated unit 1 through SOME/IP. Correspondingly, the conversion apparatus converts the API message 1 and the API message 2 to obtain a first message, and sends the first message to the MCU in the domain controller 3 through a CAN bus when the first message is a first converted packet. In some possible embodiments, if the first message is not the first converted packet, the conversion apparatus may further send the first message to a lower-layer apparatus.

In some possible embodiments, in FIG. 7, if a lower-layer apparatus (for example, the apparatus in which the CAN protocol stack is located) in the vehicle integrated unit 1 receives a first message sent by the application layer, the lower-layer apparatus may further receive at least one signal source. The lower-layer apparatus may first obtain a first wired packet through signal routing and reassembly on the at least one signal source, obtain a first converted packet based on the first message and the first wired packet, and send the first converted packet to the MCU in the domain controller 3 through the CAN bus. The at least one signal source includes at least one of the following wired packets:

at least one wired packet transmitted, through the CAN bus, by a Legacy ECU connected to the domain controller 1;
at least one wired packet transmitted, through the CAN bus or CAN over ETH, by a Legacy ECU connected to the domain controller 2; and
at least one wired packet transmitted, through the CAN bus, by a Legacy ECU connected to the vehicle integrated unit 1.

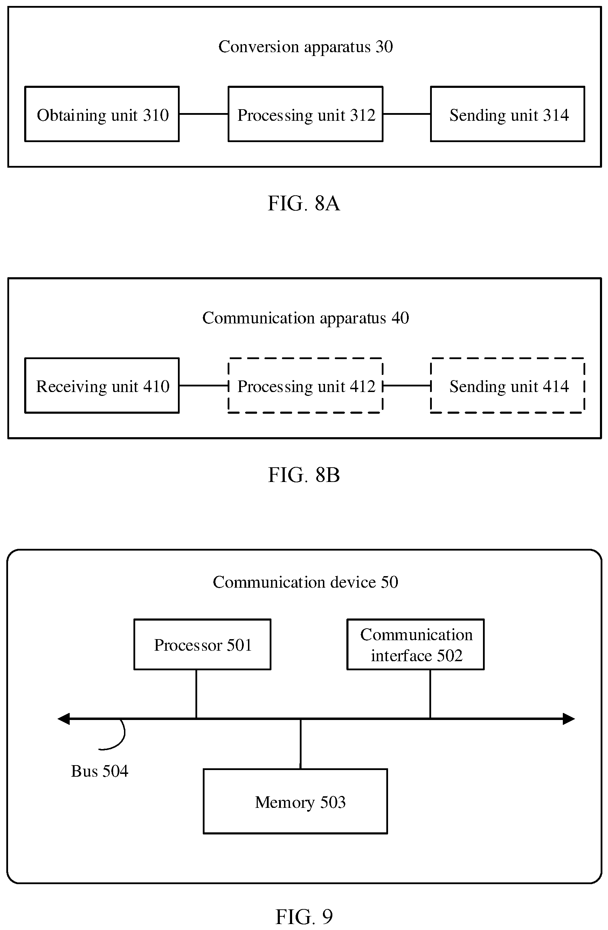

FIG. 8A is a diagram of a structure of a conversion apparatus according to an embodiment of this application. The conversion apparatus 30 includes an obtaining unit 310, a processing unit 312, and a sending unit 314. The conversion apparatus 30 may be implemented by hardware, software, or a combination of software and hardware.

The obtaining unit 310 is configured to obtain a first original message of a first vehicle. The processing unit 312 is configured to generate a first message based on the first original message. The first message is related to a feature of the first vehicle, and the first message is included in a first converted packet. The first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message. The sending unit 314 is configured to send the first message.

The conversion apparatus 30 may be configured to implement the method described in the embodiment in FIG. 3. In the embodiment in FIG. 3, the obtaining unit 310 may be configured to perform S301, and the processing unit 312 and the sending unit 314 may be configured to perform S302.

FIG. 8B is a diagram of a structure of a communication apparatus according to an embodiment of this application. The communication apparatus 40 includes a receiving unit 410. The communication apparatus 40 may be implemented by hardware, software, or a combination of software and hardware.

In an implementation, the communication apparatus 40 may be the first control apparatus in the embodiment in FIG. 6. The receiving unit 410 is configured to receive a first converted packet. The first converted packet includes a first message, the first message is generated based on a first original message of a first vehicle, and the first message is related to a feature of the first vehicle. The first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message.

In this case, the communication apparatus 40 may be configured to perform the method on the first control apparatus side in the embodiment in FIG. 6, and the receiving unit 410 may be configured to perform S604 in the embodiment in FIG. 6.

In another implementation, the communication apparatus 40 further includes a processing unit 412 and a sending unit 414. In this case, the receiving unit 410 is configured to receive a first message. The first message is generated based on a first original message of a first vehicle, and the first message is associated with a feature of the first vehicle. The processing unit 412 is configured to obtain a first converted packet based on a first wired packet and the first message. The first wired packet is obtained through signal routing and reassembly based on a wired signal in the first vehicle, and the first wired packet is related to the feature of the first vehicle. The first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, at least one first signal in the first valid signal is associated with the first message, and at least one second signal in the first valid signal is associated with the first wired packet. The sending unit 414 is configured to send the first converted packet to the first control apparatus of the first vehicle.

In this case, the communication apparatus 40 may be configured to perform the method on the target apparatus side in the embodiment in FIG. 6. Specifically, the receiving unit 410 may be configured to perform S601, the processing unit 412 may be configured to perform S602, and the sending unit 414 may be configured to perform S603.

It should be understood that division into units in the apparatus (for example, the apparatus shown in FIG. 8A or FIG. 8B) is merely logical function division. During actual implementation, all or some of the units may be integrated into one physical entity, or may be physically separated. In addition, a unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, such as a central processing unit (central processing unit, CPU) or a microprocessor, and the memory is a memory in the apparatus or a memory outside the apparatus. Alternatively, a unit in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement the functions of some or all of the units. For another example, in another implementation, the hardware circuit may be implemented by using a programmable logic device (programmable logic device, PLD). A field programmable gate array (field programmable gate array, FPGA) is used as an example. The hardware circuit may include a large quantity of logic gate circuits, and a connection relationship between the logic gate circuits is configured based on a configuration file, to implement the functions of some or all of the units. All the units in the apparatus may be implemented in a form of software invoked by the processor, or may be implemented in a form of the hardware circuit, or some of the units are implemented in a form of software invoked by the processor, and the remaining units are implemented in a form of the hardware circuit.

In embodiments of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconstructed. For example, the processor is a hardware circuit, such as an FPGA, implemented by using an application-specific integrated circuit (application-specific integrated circuit, ASIC) or a programmable logic device (programmable logic device, PLD). In the reconstructed hardware circuit, a process in which the processor loads a configuration document to implement a configuration of the hardware circuit may be understood as a process in which the processor loads instructions to implement the functions of some or all of the units. In addition, the hardware circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It may be learned that the units in the apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units in the apparatus may be integrated, or may be implemented independently. In an implementation, the units may be integrated together and implemented in a form of a system-on-a-chip (system-on-a-chip, SOC). The SOC may include at least one processor, configured to implement any one of the foregoing methods or implement the functions of the units in the apparatus. Types of the at least one processor may be different, for example, may include a CPU and an FPGA, or a CPU and an artificial intelligence processor, or a CPU and a GPU, or the like.

FIG. 9 is a diagram of a structure of a communication device according to an embodiment of this application. As shown in FIG. 9, the communication device 50 includes a processor 501, a communication interface 502, a memory 503, and a bus 504. The processor 501, the memory 503, and the communication interface 502 communicate with each other through the bus 504.

It should be understood that quantities of processors and memories in the communication device 50 are not limited in this application.

In an implementation, the communication device 50 may be a vehicle, or the communication device 50 may be a device in a vehicle. The device may be, for example, a vehicle integrated unit or a domain controller. The domain controller herein may be, for example, a VDC, an MDC, or a CDC. The communication device 50 may alternatively be a component in the device, and the component may be, for example, at least one of a chip, an integrated circuit, and the like.

The bus 504 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is for representing the bus in FIG. 9, but this does not mean that there is only one bus or only one type of bus. The bus 504 may include a path for transmitting information between components (for example, the memory 503, the processor 501, and the communication interface 502) of the communication device 50.

For details of the processor 501, refer to the related description of the processor in the foregoing embodiments. Details are not described herein again.

The memory 503 is configured to provide storage space, and the storage space may store data such as an operating system and a computer program. The memory 503 may be a combination of one or more of a random access memory (random access memory, RAM), an erasable programmable read-only memory (erasable programmable read-only memory, EPROM), a read-only memory (read-only memory, ROM), a portable read-only memory (compact disc read memory, CD-ROM), or the like. The memory 503 may exist independently, or may be integrated into the processor 501.

The communication interface 502 may be configured to provide information input or output for the processor 501. Alternatively, the communication interface 502 may be configured to receive data sent from the outside and/or send data to the outside, and may be a wired link interface including an Ethernet cable or the like, or may be a wireless (for example, Wi-Fi, Bluetooth, or universe wireless transmission) link interface. Alternatively, the communication interface 502 may further include a transmitter (for example, a radio frequency transmitter or an antenna), a receiver, or the like coupled to the interface.

The processor 501 in the communication device 50 is configured to read the computer program stored in the memory 503, to perform the foregoing methods, for example, the method described in FIG. 3 or FIG. 6.

In a possible design, the communication device 50 may be one or more modules in an entity for executing the method shown in FIG. 3, and the processor 501 may be configured to read one or more computer programs stored in the memory, and is configured to perform the following operations:

obtain a first original message of a first vehicle by using the obtaining unit 310;
generate a first message based on first original message, where the first message is related to a feature of the first vehicle, and the first message is included in a first converted packet; and the first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message; and
send the first message by using the sending unit 314.

In a possible design, the communication device 50 may be one or more modules in an entity (for example, a first control apparatus) for executing the method shown in FIG. 6, and the processor 501 may be configured to read one or more computer programs stored in the memory, and is configured to perform the following operation:
receive a first converted packet by using the receiving unit 410. The first converted packet includes a first message, the first message is generated based on a first original message of a first vehicle, and the first message is related to a feature of the first vehicle. The first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message.

In a possible design, the communication device 50 may be one or more modules in an entity (for example, a target apparatus) for executing the method shown in FIG. 6, and the processor 501 may be configured to read one or more computer programs stored in the memory, and is configured to perform the following operations:

receive a first message by using the receiving unit 410, where the first message is generated based on a first original message of a first vehicle, and the first message is associated with a feature of the first vehicle;
obtain a first converted packet based on a first wired packet and the first message, where the first wired packet is obtained through signal routing and reassembly based on a wired signal in the first vehicle, and the first wired packet is related to the feature of the first vehicle; and the first converted packet includes a plurality of signals, the plurality of signals include a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, at least one first signal in the first valid signal is associated with the first message, and at least one second signal in the first valid signal is associated with the first wired packet; and
send the first converted packet to a first control apparatus of the first vehicle by using the sending unit 414.

In the foregoing embodiments in this specification, the descriptions of each embodiment have respective focuses. For a part that is not described in detail in an embodiment, refer to related descriptions in another embodiment. In addition, in embodiments of this application, unless otherwise stated or there is a logic conflict, terms and/or descriptions between the embodiments are consistent and may be mutually referenced, and technical features in different embodiments may be combined into a new embodiment based on an internal logical relationship thereof.

It should be noted that, a person of ordinary skill in the art may understand that, all or some of the steps in the methods of the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory, (electrically-erasable programmable read-only memory, EEPROM), a compact disc read-only memory (compact disc read-only memory, CD-ROM) or another optical disk memory, a magnetic disk memory, a magnetic tape memory, or any other computer-readable medium that can be configured to carry or store data.

The technical solutions of this application essentially, or the contributing part, or all or some of the technical solutions may be implemented in a form of a software product. The computer software product is stored in a storage medium and includes several instructions for enabling a device (which may be a personal computer, a server, a network device, a robot, a single-chip microcomputer, a chip, or the like) to perform all or some of the steps of the methods described in embodiments of this application.

**Claims**

1.  A packet conversion method, applied to a conversion apparatus, wherein the method comprises:

    obtaining a first original message of a first vehicle;
    generating a first message based on the first original message, wherein the first message is related to a feature of the first vehicle, and the first message is comprised in a first converted packet; and
sending the first message, wherein
the first converted packet comprises a plurality of signals, the plurality of signals comprise a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message.

2. The method according to claim 1, wherein the sending the first message comprises:

   sending the first message to a first control apparatus of the first vehicle , wherein the first message is the first converted packet; or
   sending the first message to a target apparatus of the first vehicle, wherein a communication protocol stack is deployed on the target apparatus.

3. The method according to claim 2, wherein in a case of sending the first message to the target apparatus, the first converted packet further comprises a first wired packet, the first wired packet is obtained through signal routing and reassembly based on a wired signal in the first vehicle, the first wired packet is related to the feature of the first vehicle, and at least one second signal in the first valid signal is associated with the first wired packet.

4. The method according to any one of claims 1 to 3, wherein the first original message comprises at least one message, a type of the first original message comprises at least one of an application programming interface API message and an in-vehicle wired signal, and the API message comprises at least one of the following types:

   an API message corresponding to a scalable service-oriented middleware over IP SOME/IP-based service; and
   an API message corresponding to an in-vehicle wired signal-based service.

5. The method according to claim 4, wherein the first original message comprises a first API message and a second API message, and the first API message and the second API message satisfy any one of the following cases:

   the first API message and the second API message correspond to a same service; or
   the first API message and the second API message correspond to different services.

6. The method according to claim 5, wherein the obtaining a first original message of a first vehicle comprises:

   receiving the first API message from a second control apparatus of the first vehicle; and
   receiving the second API message from a third control apparatus of the first vehicle.

7. The method according to any one of claims 1 to 5, wherein the obtaining a first original message of a first vehicle comprises:
   receiving the first original message from a fourth control apparatus of the first vehicle.

8. The method according to any one of claims 1 to 7, wherein the type of the first original message comprises the application programming interface API message, and the at least one first signal in the first valid signal corresponds to at least one API parameter in the first original message.

9. The method according to claim 8, wherein a first signal in the first valid signal comprises at least one first state, a first API parameter in the first original message corresponds to the first signal, the first API parameter comprises at least one second state, and a mapping rule between the at least one first state and the at least one second state satisfies at least one of the following cases:

   mapping is performed based on a similarity between physical meanings of states; and
   a quantity of the at least one first state is different from a quantity of the at least one second state, and mapping is performed based on a preset ratio, wherein the preset ratio is obtained based on the quantity of the at least one first state and the quantity of the at least one second state.

10. The method according to any one of claims 1 to 9, wherein a type of the first converted packet is an in-vehicle wired signal, and the first converted packet is any one of a controller area network CAN packet, a local interconnect network LIN packet, and a FlexRay packet.

11. The method according to any one of claims 1 to 10, wherein the conversion apparatus is deployed in any one of the following components of the first vehicle:

a vehicle integrated unit VIU;
a vehicle domain controller VDC;
a cockpit domain controller CDC; or
a mobile data center MDC.

12. The method according to any one of claims 1 to 11, wherein the method further comprises:

obtaining a second original message of a second vehicle;
generating a second message based on the second original message, wherein the second message is related to a feature of the second vehicle, and the second message is comprised in a second converted packet; and
sending the second message, wherein
the second converted packet comprises a plurality of signals, the plurality of signals comprise a second valid signal and a second invalid signal, the second valid signal corresponds to the feature of the second vehicle, the second invalid signal is a signal corresponding to a feature of a vehicle other than the second vehicle, the feature of the vehicle other than the second vehicle is different from the feature of the second vehicle, at least one signal in the second valid signal is associated with the second message, the first valid signal and the second valid signal differ in terms of at least one signal, and the first invalid signal and the second invalid signal differ in terms of at least one signal.

13. A packet receiving method, wherein the method comprises:

receiving a first converted packet, wherein the first converted packet comprises a first message, the first message is generated based on a first original message of a first vehicle, and the first message is related to a feature of the first vehicle, wherein
the first converted packet comprises a plurality of signals, the plurality of signals comprise a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message.

14. The method according to claim 13, wherein the receiving a first converted packet comprises:

receiving the first converted packet from a conversion apparatus of the first vehicle, wherein the first message is the first converted packet; or
receiving the first converted packet from a target apparatus of the first vehicle, wherein a communication protocol stack is deployed on the target apparatus.

15. The method according to claim 14, wherein in a case of receiving the first converted packet from the target apparatus, the first converted packet further comprises a first wired packet, the first wired packet is obtained through signal routing and reassembly based on a wired signal in the first vehicle, the first wired packet is related to the feature of the first vehicle, and at least one second signal in the first valid signal is associated with the first wired packet.

16. The method according to any one of claims 13 to 15, wherein the first original message comprises at least one message, a type of the first original message comprises at least one of an application programming interface API message and an in-vehicle wired signal, and the API message comprises at least one of the following types:

an API message corresponding to a scalable service-oriented middleware over IP SOME/IP-based service; and
an API message corresponding to an in-vehicle wired signal-based service.

17. The method according to claim 16, wherein the first original message comprises a first API message and a second API message, and the first API message and the second API message satisfy any one of the following cases:

the first API message and the second API message correspond to a same service; or

the first API message and the second API message correspond to different services.

18. The method according to any one of claims 13 to 17, wherein the type of the first original message comprises the application programming interface API message, and the at least one first signal in the first valid signal corresponds to at least one API parameter in the first original message.

19. The method according to claim 18, wherein a first signal in the first valid signal comprises at least one first state, a first API parameter in the first original message corresponds to the first signal, the first API parameter comprises at least one second state, and a mapping rule between the at least one first state and the at least one second state satisfies at least one of the following cases:

    mapping is performed based on a similarity between physical meanings of states; and
    a quantity of the at least one first state is different from a quantity of the at least one second state, and mapping is performed based on a preset ratio, wherein the preset ratio is obtained based on the quantity of the at least one first state and the quantity of the at least one second state.

20. The method according to any one of claims 13 to 19, wherein a type of the first converted packet is an in-vehicle wired signal, and the first converted packet is any one of a controller area network CAN packet, a local interconnect network LIN packet, and a FlexRay packet.

21. A packet conversion method, wherein the method comprises:

    receiving a first message, wherein the first message is generated based on a first original message of a first vehicle, and the first message is associated with a feature of the first vehicle;
    obtaining a first converted packet based on a first wired packet and the first message, wherein the first wired packet is obtained through signal routing and reassembly based on a wired signal in the first vehicle, and the first wired packet is related to the feature of the first vehicle; and the first converted packet comprises a plurality of signals, the plurality of signals comprise a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, at least one first signal in the first valid signal is associated with the first message, and at least one second signal in the first valid signal is associated with the first wired packet; and
    sending the first converted packet to a first control apparatus of the first vehicle.

22. The method according to claim 21, wherein the first original message comprises at least one message, a type of the first original message comprises at least one of an application programming interface API message and an in-vehicle wired signal, and the API message comprises at least one of the following types:

    an API message corresponding to a scalable service-oriented middleware over IP SOME/IP-based service; and
    an API message corresponding to an in-vehicle wired signal-based service.

23. The method according to claim 22, wherein the first original message comprises a first API message and a second API message, and the first API message and the second API message satisfy any one of the following cases:

    the first API message and the second API message correspond to a same service; or
    the first API message and the second API message correspond to different services.

24. The method according to any one of claims 21 to 23, wherein the type of the first original message comprises the application programming interface API message, and the at least one first signal in the first valid signal corresponds to at least one API parameter in the first original message.

25. The method according to claim 24, wherein a first signal in the first valid signal comprises at least one first state, a first API parameter in the first original message corresponds to the first signal, the first API parameter comprises at least one second state, and a mapping rule between the at least one first state and the at least one second state satisfies at least one of the following cases:

    mapping is performed based on a similarity between physical meanings of states; and
    a quantity of the at least one first state is different from a quantity of the at least one second state, and mapping is performed based on a preset ratio, wherein the preset ratio is obtained based on the quantity of the at least one first state and the quantity of the at least one second state.

26. The method according to any one of claims 21 to 25, wherein a type of the first converted packet is an in-vehicle wired signal, and the first converted packet is any one of a controller area network CAN packet, a local interconnect network LIN packet, and a FlexRay packet.

27. A packet conversion apparatus, wherein the apparatus comprises:

an obtaining unit, configured to obtain a first original message of a first vehicle;
a processing unit, configured to generate a first message based on the first original message, wherein the first message is related to a feature of the first vehicle, and the first message is comprised in a first converted packet; and
a sending unit, configured to send the first message, wherein
the first converted packet comprises a plurality of signals, the plurality of signals comprise a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message.

28. A packet receiving apparatus, wherein the apparatus comprises:

a receiving unit, configured to receive a first converted packet, wherein the first converted packet comprises a first message, the first message is generated based on a first original message of a first vehicle, and the first message is related to a feature of the first vehicle, wherein
the first converted packet comprises a plurality of signals, the plurality of signals comprise a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, and at least one first signal in the first valid signal is associated with the first message.

29. A packet conversion apparatus, wherein the apparatus comprises:

a receiving unit, configured to receive a first message, wherein the first message is generated based on a first original message of a first vehicle, and the first message is associated with a feature of the first vehicle;
a processing unit, configured to obtain a first converted packet based on a first wired packet and the first message, wherein the first wired packet is obtained through signal routing and reassembly based on a wired signal in the first vehicle, and the first wired packet is related to the feature of the first vehicle; and the first converted packet comprises a plurality of signals, the plurality of signals comprise a first valid signal and a first invalid signal, the first valid signal corresponds to the feature of the first vehicle, the first invalid signal is a signal corresponding to a feature of a vehicle other than the first vehicle, the feature of the vehicle other than the first vehicle is different from the feature of the first vehicle, at least one first signal in the first valid signal is associated with the first message, and at least one second signal in the first valid signal is associated with the first wired packet; and
a sending unit, configured to send the first converted packet to a first control apparatus of the first vehicle.

30. A chip, wherein the chip comprises at least one processor and a communication interface, wherein
the communication interface is configured to receive and/or send data, and/or the communication interface is configured to provide input and/or output for the processor; and the at least one processor is configured to implement the method according to any one of claims 1 to 12, or configured to implement the method according to any one of claims 13 to 20, or configured to implement the method according to any one of claims 21 to 26.

31. A vehicle, wherein the vehicle comprises at least one of a first apparatus, a second apparatus, and a third apparatus, the first apparatus is configured to perform the method according to any one of claims 1 to 12, the second apparatus is configured to perform the method according to any one of claims 13 to 20, and the third apparatus is configured to perform the method according to any one of claims 21 to 26.

32. A computer-readable storage medium, wherein the computer-readable storage medium stores program instructions, and the program instructions are for implementing the method according to any one of claims 1 to 12, or for implementing the method according to any one of claims 13 to 20, or for implementing the method according to any one of claims 21 to 26.

33. A computer program product, wherein when the computer program product runs on a processor, an apparatus is enabled to perform the method according to any one of claims 1 to 12, or an apparatus is enabled to perform the method according to any one of claims 13 to 20, or an apparatus is enabled to perform the method according to any one of claims 21 to 26.

Ethernet ————— In-vehicle wired signal bus — — — — —

FIG. 1

**At least one message source terminal**

**Target receiving terminal**

Second control apparatus

Third control apparatus

⋮

**Conversion apparatus**

First control apparatus

FIG. 2

S301: Obtain a first original message of a first vehicle

S302: Convert the first original message into a first message based on a feature of the first vehicle

S303: Send the first message

FIG. 3

**API parameter: HighBeamIndicatorReq**

- 0x0: OFF (off)
- 0x1: AutoOFF, HighBeamON
(an automatic mode is off, a high
beam light is on)
- 0x2: AutoON, HighBeamON
(an automatic mode is on, a high
beam light is on)
- 0x3: AutoON, HighBeamOFF
(an automatic mode is on, a high
beam light is off)
- 0xFE: Initial (initial)
- 0xFF: Invalid (invalid)

**At least
one second
state**

**CAN signal: VIU_HighBeamIndReq**

- 0x0: Initial (initial)
- 0x1: OFF (off)
- 0x2: AHB OFF, HiBeam ON
(an automatic high beam control
system is off, a high beam light is on)
- 0x3: AHB ON, HiBeam OFF
(an automatic high beam control
system is on, a high beam light is off)
- 0x4: AHB ON, HiBeam ON
(an automatic high beam control
system is on, a high beam light is on)
- 0x5–0x7: Reserved (reserved)

**At least
one first
state**

FIG. 4A

**API parameter: EPS_FltIncn**
- 0x0: normal (normal)
- 0x1: yellow lamp request (yellow lamp request)
- 0x2: red lamp request (red lamp request)

**CAN signal: VIU_EPS_FaultState**
- 0x0: no failure (no failure)
- 0x1: slight failure (slight failure)
- 0x2: critical failure (critical failure)
- 0x3: fatal failure (fatal failure)
- 0x4: reserved (reserved)

FIG. 4B

**API parameter 1: EMS_PortConnectStatus**
- 0: init (initial value)
- 1: unplug (unconnected)
- 2: semilink (semilink)
- 3: plugin (connected)
- 4: abnormal (abnormal)
- 0xFF: invalid (invalid value)

**API parameter 2: EMS_ChargeSt**
- 0x0: un_charge (uncharged)
- 0x1: charging (charging)
- 0x2: full_of_charge (full of charge)
- 0x3: charge_end (charging ended)
- 0x4: heating (battery pack heating)
- 0x5: keep_warm (battery pack warm keeping)
- 0x6: abnormal (abnormal)
- 0x7: derating (derating charging)
- 0xFF: invalid (invalid)

**CAN signal: VIU_BMS_ACChrgSt**
- 0x0: off (connector not plugged in)
- 0x1: init (initial)
- 0x2: standby (standby)
- 0x3: charging (charging)
- 0x4: chg_end (charging ended)
- 0x5: preheat (preheat)
- 0x6: fault (charging abnormally ended)
- 0x7–0xF: reserved (reserved)

FIG. 4C

EP 4 586 591 A1

**API parameter: HvBattFltSt**
- 0: no_fault (no fault)
- 1: fault_level1 (fault level 1)
- 2: fault_level2 (fault level 2)
- 3: fault_level3 (fault level 3)
- 4: fault_level4 (fault level 4)
- 5: fault_level5 (fault level 5)
- 6: fault_level6 (fault level 6)
- 7: fault_level7 (fault level 7)
- 8: fault_level8 (fault level 8)
- 0xFF: invalid (invalid)

**CAN signal: VIU_BMS_FaultLevel**
- 0x0: normal (normal)
- 0x1: level1 (level 1)
- 0x2: level2 (level 2)
- 0x3: level3 (level 3)
- 0x4: level4 (level 4)
- 0x5: level5 (level 5)
- 0x6: level6 (level 6)
- 0x7–0xF: reserved (reserved)

FIG. 5

| Conversion apparatus | Target apparatus | First control apparatus |
|---|---|---|

S601: First message

S602: Obtain a first converted packet based on a first wired packet and the first message

S603: First converted packet

S604: Receive the first converted packet

FIG. 6

FIG. 7

Conversion apparatus 30

| Obtaining unit 310 | Processing unit 312 | Sending unit 314 |

FIG. 8A

Communication apparatus 40

| Receiving unit 410 | Processing unit 412 | Sending unit 414 |

FIG. 8B

Communication device 50

Processor 501

Communication interface 502

Bus 504

Memory 503

FIG. 9

## INTERNATIONAL SEARCH REPORT

| | International application No. |
|---|---|
| | **PCT/CN2022/121477** |

### A. CLASSIFICATION OF SUBJECT MATTER

H04L69/08(2022.01)i

According to International Patent Classification (IPC) or to both national classification and IPC

### B. FIELDS SEARCHED

Minimum documentation searched (classification system followed by classification symbols)

H04L H04W

Documentation searched other than minimum documentation to the extent that such documents are included in the fields searched

Electronic data base consulted during the international search (name of data base and, where practicable, search terms used)

CNABS; CNTXT; VEN; WPABS; ENTXTC; ENTXT; CNKI; 3GPP; 百度, BAIDU: 车, 消息, 转换, 有效, 无效, 信号, 缺省, 有线, 以太网, car?, message?, transfer+, valid, invalid, signal?, default, CAN, LIN, FlexRay, SOME/IP

### C. DOCUMENTS CONSIDERED TO BE RELEVANT

| Category* | Citation of document, with indication, where appropriate, of the relevant passages | Relevant to claim No. |
|---|---|---|
| Y | CN 115001897 A (APOLLO INTELLIGENT TECHNOLOGY (BEIJING) CO., LTD.) 02 September 2022 (2022-09-02) description, paragraphs 42-49 and 194-206 | 1-33 |
| Y | CN 106603565 A (SHANGHAI PUDONG SOFTWARE PARK HUIZHI SOFTWARE DEVELOPMENT CO., LTD.) 26 April 2017 (2017-04-26) description, paragraphs 71-85 | 1-33 |
| Y | CN 112242909 A (SANGFOR TECHNOLOGIES INC.) 19 January 2021 (2021-01-19) description, paragraphs 8-33 | 1-33 |
| Y | US 2019132424 A1 (HYUNDAI MOTOR COMPANY et al.) 02 May 2019 (2019-05-02) description, paragraphs 52-65 | 1-33 |
| A | CN 114726914 A (BEIJING ZIROOM INFORMATION TECHNOLOGY CO., LTD.) 08 July 2022 (2022-07-08) entire document | 1-33 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 May 2023** | **25 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2022/121477** |

| Patent document cited in search report | | | Publication date (day/month/year) | Patent family member(s) | | | Publication date (day/month/year) |
| --- | --- | --- | --- | --- | --- | --- | --- |
| CN | 115001897 | A | 02 September 2022 | None | | | |
| CN | 106603565 | A | 26 April 2017 | None | | | |
| CN | 112242909 | A | 19 January 2021 | None | | | |
| US | 2019132424 | A1 | 02 May 2019 | KR | 20190049037 | A | 09 May 2019 |
| | | | | KR | 102360168 | B1 | 09 February 2022 |
| | | | | US | 10757229 | B2 | 25 August 2020 |
| CN | 114726914 | A | 08 July 2022 | None | | | |

Form PCT/ISA/210 (patent family annex) (July 2022)